# EUROPEAN PATENT SPECIFICATION

(11) **EP 1 906 401 B1**
(45) Date of publication and mention of the grant of the patent: **09.03.2011**
(21) Application number: 07018070.8
(22) Date of filing: 14.09.2007
(51) Int. Cl.: G11B 7/246

(54) **Optical information recording medium and azo-metal complex dye**
Aufzeichnungsmedium für optische Daten und Azometallkomplex-Färbemittel
Support d'enregistrement d'informations optiques et colorant complexe azo-métallique

(30) Priority: 28.09.2006 JP 2006265692; 13.04.2007 JP 2007106459
(43) Date of publication of application: 02.04.2008
(73) Proprietor: Fujifilm Corporation, Minato-ku Tokyo 106-8620 (JP)
(72) Inventor: Watanabe, Kousuke, Minami-ashigara-shi Kanagawa 250-0193 (JP); Katayama, Kazutoshi, Odawara-shi Kanagawa 250-0001 (JP); Hashizume, Taro, Odawara-shi Kanagawa 250-0001 (JP)
(74) Representative: Höhfeld, Jochen

(56) References cited:
- JP-A- 2001 158 862
- JP-A- 2001 234 254
- JP-A- 2006 142 789

## Description

### BACKGROUND OF THE INVENTION

### Field of the Invention:

The present invention relates to an optical information recording medium for information recording/reproduction using a laser light, and particularly to an azo-metal complex compound having a remarkably excellent light fastness, a heat mode-type optical information recording medium suitable for information recording/reproduction using a laser light having a short wavelength of 440 nm or less, and an azo-metal complex dye suitable for use in a recording layer of an optical information recording medium.

### Description of the Related Art:

Recently Hi-Vision broadcasts and networks such as Internet have been rapidly popularized. Further, in view of upcoming HDTV (High Definition Television) broadcasting, there is an increasing demand for large-capacity recording media for easily recording image information at low costs. Though CD-Rs, and DVD-Rs capable of high-density recording using visible laser lights (630 to 680 nm) have been established to some extent as large-capacity recording media, the recording capacities thereof are not sufficiently large for future requirements. Thus, development of optical disks, which utilize laser lights with shorter wavelengths to achieve higher recording densities and larger recording capacities as compared with the DVD-Rs, has been progressed. For example, an optical recording disk utilizing a 405-nm blue laser light, called a Blu-ray disc, has been proposed.

In conventional DVD-R type optical disks, azo-metal complex dyes have been advantageously used as dye compounds in recording layers (see Japanese Laid-Open Patent Publication Nos. 11-310728, 11-130970, 2002-274040, and 2000-168237). These azo-metal complex dyes show absorption waveforms corresponding to red laser lights, and thereby are unsuitable for the 405-nm laser light. Thus, azo-metal complex dyes for the optical recording disk utilizing the 405-nm blue laser light has been studied so as to shorten the absorption wavelengths of the azo-metal complex dyes for the DVD-Rs as disclosed in Japanese Laid-Open Patent Publication Nos. 2001-158862 and 2006-142789. However, in Japanese Laid-Open Patent Publication Nos. 2001-158862 and 2006-142789, though the maximum absorption wavelengths of solutions or films containing the dyes are described, the light fastness and the recording/reproducing properties in optical information recording media are not described in detail, and the actual storability and the actual recording/reproducing properties are not known.

Films of the azo-metal complexes described in Japanese Laid-Open Patent Publication Nos. 2001-158862 and 2006-142789 were evaluated with respect to the light fastness and recording/reproducing properties in the optical information recording media utilizing blue laser lights. As a result, all the films are not satisfactory in both the light fastness and the recording/reproducing properties (the recording sensitivity, 2T CNR).

### SUMMARY OF THE INVENTION

In view of the above problems, an object of the present invention is to provide an optical information recording medium having an excellent solubility, excellent recording/reproducing properties, and a remarkably high light fastness, specifically an optical information recording medium capable of information recording by irradiation with a laser light having a wavelength of 440 nm or less, and an azo-metal complex dye useful for forming the optical information recording medium.

Another object of the present invention is to provide an azo-metal complex dye excellent in light fastness and thermal stability.

It has been considered that a dye per se would need to be excellent in light fastness and thermal stability to obtain an optical information recording medium with satisfactory light fastness and reproduction durability. The relation between the reproduction durability and the thermal stability was found in the course of accomplishing the present invention, and it has been presumed that a dye layer (a recording layer) is heated under irradiation with a reproducing light, and the dye is decomposed due to the temperature raise, resulting in reproduction deterioration. Thus, in view of forming a more rigid complex structure to improve both the light fastness and thermal stability, the inventors planned to select a metal ion and a ligand capable of causing back donation from the metal ion to the ligand in the electron effect and forming a stable chelating structure (two 6-membered rings), thereby increasing the bonding power.

As a result of intense research based on this idea, the inventors have found that the compound of the present invention is clearly more excellent in light fastness than conventional azo-metal complex dyes. When a compound is designed based on such an idea, the compound is expected to have excessively high thermal stability, and thereby have undesired thermal decomposition property and poor sensitivity in an optical information recording medium. However, the compound of the present invention unexpectedly has appropriate thermal decomposition property and excellent recording sensitivity.

It has found that, in an optical information recording medium for information recording/reproduction with a blue laser light having a wavelength of 440 nm or less, a particular azo-metal complex dye is effective for obtaining excellent light fastness, solubility, film stability, recording/reproducing properties, and reproduction durability. The present invention has been accomplished by the finding.

The present invention is achieved by the following features.
[1] An optical information recording medium according to a first aspect of the present invention, comprising a transparent, disc-shaped substrate having pregrooves with a track pitch of 50 to 500 nm, and a recording layer on which information is recorded by irradiation with a laser light having a wavelength of 440 nm or less, wherein the recording layer comprises at least one azo-metal complex dye derived from a metal ion (or a metal oxide ion) and an azo dye represented by the following structural formula (I-1) or (I-2). 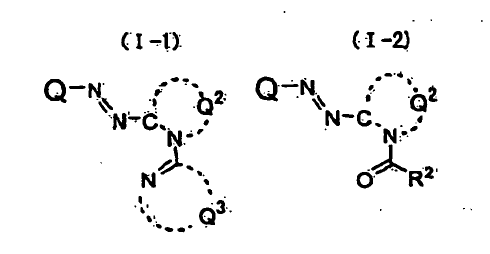 In the structural formulae (I-1) and (I-2), Q represents a carbocyclic group or a heterocyclic group, Q² and Q³ independently represent an atomic group forming a nitrogen-containing heterocycle, and R² represents a substituent.
[2] An optical information recording medium according to [1], wherein the recording layer comprises at least one azo-metal complex dye derived from a metal ion (or a metal oxide ion) and an azo dye represented by the following general formula (1).

### General formula (1)

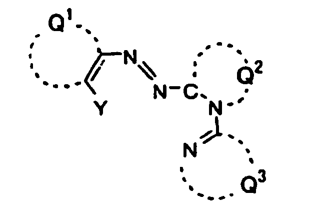

In the general formula (1), Q¹ represents an atomic group forming a carbocycle or a heterocycle, Q² and Q³ independently represent an atomic group forming a nitrogen-containing heterocycle, and Y represents a group capable of coordinating to a metal ion.
[3] An optical information recording medium according to [1], wherein the nitrogen-containing heterocycle formed by Q² is represented by one of the following structural formulae (q-1) to (q-4). 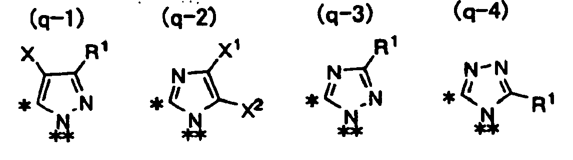 In the structural formulae (q-1) to (q-4), each asterisk * represents a position at which the heterocycle is bonded to the -N=N- group, each double asterisk ** represents a position at which the heterocycle is bonded to the nitrogen-containing heterocycle formed by Q³ or the -COR² group, X, X¹, and X² independently represent a substituent, and R¹ represents a hydrogen atom or a substituent.
[4] An optical information recording medium according to [2], wherein the carbocycle or heterocycle formed by Q¹ is a benzene ring, a pyrazole ring, or a ring represented by one of the following structural formulae (C-1) to (C-4). When the heterocycle formed by Q¹ is the ring represented by one of the structural formulae (C-1) to (C-4), Y is the hydroxyl group in the formulae. 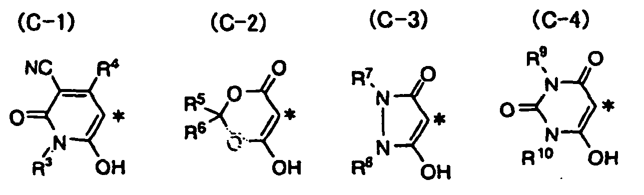 In the structural formula (C-1) to (C-4), each asterisk * represents a position at which the ring is bonded to the azo group (the -N=N- group), R³ to R¹⁰ independently represent a hydrogen atom or a substituent, and adjacent substituents may be bonded to form a ring.
[5] An optical information recording medium according to [2], wherein the azo-metal complex dye is represented by the following general formula (2).

### General formula (2)

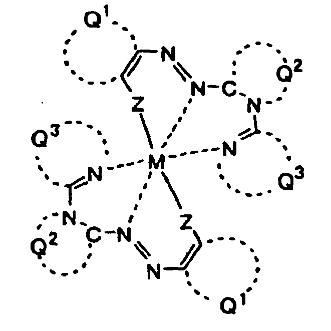

In the general formula (2), M represents a metal ion (or a metal oxide ion), Q¹ represents an atomic group forming a carbocycle or a heterocycle, Q² and Q³ independently represent an atomic group forming a nitrogen-containing heterocycle, and Z represents a group provided by eliminating a hydrogen atom from Y (Y = ZH).
[6] An optical information recording medium according to [3] or [5], wherein the azo-metal complex dye is represented by the following general formula (3) or (4).

### General formula (3)

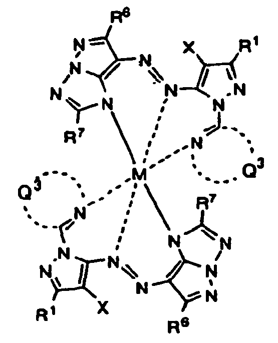

### General formula (4)

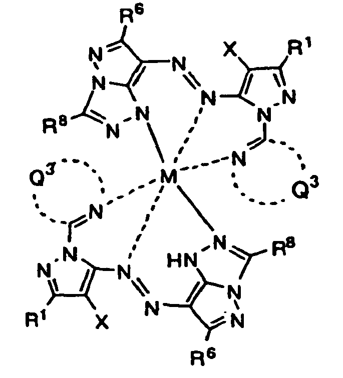

In the general formulae (3) and (4), M represents a metal ion (or a metal oxide ion), Q³ represents an atomic group forming a nitrogen-containing heterocycle, X represents a substituent, and R¹, R⁶, R⁷, and R⁸ independently represent a hydrogen atom or a substituent.
[7] An optical information recording medium according to [1], wherein the metal ion in the azo-metal complex dye is a copper ion, an iron ion, or a manganese ion.
[8] An optical information recording medium according to [1], wherein a reflection layer and a dye-containing recording layer are stacked in this order on a pregroove-formed surface of the substrate having pregrooves with a track pitch of 50 to 500 nm.
[9] An azo-metal complex dye according to a second aspect of the present invention, derived from a metal ion (or a metal oxide ion) and an azo dye represented by the following general formula (1).

### General formula (1)

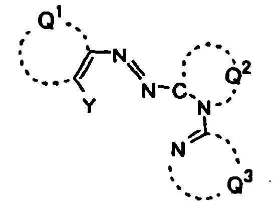

In the general formula (1), Q¹ represents an atomic group forming a carbocycle or a heterocycle, Q² and Q³ independently represent an atomic group forming a nitrogen-containing heterocycle, and Y represents a group capable of coordinating to a metal ion.

As described above, the optical information recording medium of the present invention is capable of information recording/reproduction using a blue laser light having a wavelength of 440 nm or less, and is remarkably excellent in light fastness.

Further, by using the azo-metal complex dye of the present invention, an optical information recording medium (particularly an optical information recording medium capable of information recording by irradiation with a laser light having a wavelength of 440 nm or less), excellent in light fastness, reproduction durability, and film stability even after recording, can be produced without deterioration of the recording/reproducing properties.

The azo-metal complex dye of the present invention has high solubility, light fastness, and thermal stability, and thereby can be used for photographic materials, UV absorbers, color filter dyes, color conversion filters, thermal transfer recording materials, inks, and the like.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic cross-sectional view showing an example of an optical information recording medium according to Embodiment (1); and
FIG. 2 is a schematic cross-sectional view showing an example of an optical information recording medium according to Embodiment (2).

### DESCRIPTION OF THE PREFERRED EMBODIMENTS

The optical information recording medium and azo-metal complex dye of the present invention are described in detail below.

The optical information recording medium of the present invention has at least one recording layer on a substrate, and information can be recorded on the recording layer. It is preferred that the optical information recording medium further has a light reflection layer and a protective layer.

The recording layer in the optical information recording medium contains at least one particular azo-metal complex dye.

The azo-metal complex dye of the present invention is described below. The azo-metal complex dye is prepared by reacting an azo dye with a metal ion (which may be a metal oxide ion), to coordinate the azo dye to the metal ion.

Examples of the metal ions include ions of Mg, Al, Si, Ca, Sc, Ti, V, Cr, Mn, Fe, Co, Ni, Cu, Zn, Ga, Ge, As, Sr, Y, Zr, Nb, Mo, Tc, Ru, Rh, Pd, Ag, Cd, In, Sn, Sb, Ba, Pr, Eu, Yb, Hf, Ta, W, Re, Os, Ir, Pt, Au, Hg, Tl, Pb, Bi, and Th. Preferred among them are ions of transition metals. The transition metals are elements of Groups IIIa to VIII and Ib of the Periodic Table of Elements, which have an incomplete d-electron shell. The transition metal is not particularly limited, and preferably Mn, Fe, Co, Ni, Cu, Zn, Cr, Ru, Rh, Pd, Ir, Pt, or Re, more preferably Cr, Mn, Fe, Co, Ni, Cu, or Zn, further preferably Mn, Fe, Co, Ni, Cu, or Zn, particularly preferably Fe, Co, Ni, or Cu.

The metal ion is preferably divalent or trivalent, more preferably divalent. Examples of the divalent or trivalent metal ions include Mn²⁺, Fe²⁺, Fe³⁺, Co²⁺, Co³⁺, Ni²⁺, Ni³⁺, Cu²⁺, Zn²⁺, Cr³⁺, Ru²⁺, Rh³⁺, Pd²⁺, Ir³⁺, Pt²⁺, and Re⁺. Preferred among them are Mn²⁺, Fe²⁺, Fe³⁺, Co²⁺, Co³⁺, Ni²⁺, Ni³⁺, Cu²⁺, and Zn²⁺, more preferred are Mn²⁺, Fe²⁺, Co²⁺, Co³⁺, Ni²⁺, Cu²⁺, and Zn²⁺. In the present invention, Mn²⁺, Fe²⁺ and Cu²⁺ are still further preferred from the viewpoints of the light fastness and the recording/reproducing properties. Particularly, Fe²⁺ and Cu²⁺ are preferred.

In conventional azo-metal complex dyes for optical information recording media, Ni ions and Co ions have been more widely used than Mn ions, Cu ions and Fe ions from the viewpoint of the light fastness. However, the Cu ions and Fe ions are superior to the Ni ions and Co ions in terms of toxicity to the environment and human health. It is especially significant to use low-toxic metal ions such as Cu ions, Zn ions, and Fe ions for expanding the use of the optical information recording media and the azo-metal complex dyes.

Although the azo dye shown above is in the azo form in the azo-hydrazone tautomeric equilibrium, the azo dye may be in the hydrazone form. In the present invention, the dye in the hydrazone form is considered to be equivalent to that in the azo form.

Then, the general formulae (I-1) and (I-2) are described below.

Q represents a carbocyclic group or a heterocyclic group. Q is preferably a carbocycle or a heterocycle formed by Q¹ shown in the general formula (1).

Q² and Q³ independently represent an atomic group forming a nitrogen-containing heterocycle.

Q² represents a group forming a nitrogen-containing heterocycle. The nitrogen-containing heterocycle is not particularly limited, and may be a heterocycle formed by Q², the carbon atom, and the nitrogen atom, such as a pyrazole ring, a pyrrole ring, an imidazole ring, or a triazole ring. These rings may have a substituent, and may form a condensed ring.

Q² represents an atomic group forming a nitrogen-containing heterocycle. The nitrogen-containing heterocyclic group formed by Q² is preferably represented by any one of the following structural formulae (q-1) to (q-4), more preferably represented by the formula (q-1) or (q-2), and further preferably represented by the formula (q-1).

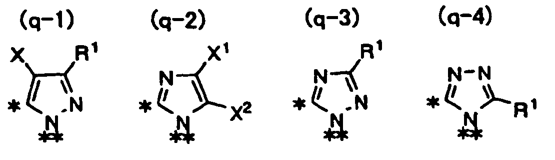

In the structural formulae (q-1) to (q-4), each asterisk * represents a position at which the heterocycle is bonded to the -N=N- group, and each double asterisk ** represents a position at which the heterocycle is bonded to the nitrogen-containing heterocycle formed by Q³ or the - COR² group. X, X¹, and X² independently represent a substituent, and R¹ represents a hydrogen atom or a substituent.

The substituent independently represented by X, X¹ or X² is not particularly limited, and examples thereof include halogen atoms, alkyl groups including cycloalkyl groups and bicycloalkyl groups, alkenyl groups including cycloalkenyl groups and bicycloalkenyl groups, alkynyl groups, aryl groups, heterocyclic groups, a cyano group, a hydroxyl group, a nitro group, a carboxyl group, alkoxy groups, aryloxy groups, silyloxy groups, heterocyclyloxy groups, acyloxy groups, carbamoyloxy groups, alkoxycarbonyloxy groups, aryloxycarbonyloxy groups, amino groups including anilino groups, acylamino groups, aminocarbonylamino groups, alkoxycarbonylamino groups, aryloxycarbonylamino groups, sulfamoylamino groups, alkyl or aryl sulfonylamino groups, mercapto groups, alkylthio groups, arylthio groups, heterocyclylthio groups, sulfamoyl groups, a sulfo group, alkyl or aryl sulfinyl groups, alkyl or aryl sulfonyl groups, acyl groups, aryloxycarbonyl groups, alkoxycarbonyl groups, carbamoyl groups, aryl or heterocyclyl azo groups, imide groups, phosphino groups, phosphinyl groups, phosphinyloxy groups, phosphinylamino groups, and silyl groups.

More specifically, examples of X, X¹, and X² include halogen atoms such as chlorine, bromine, and iodine atoms; alkyl groups, which may be linear, branched, or cyclic and may be substituted or unsubstituted, including noncyclic alkyl groups (preferably alkyl groups having 1 to 30 carbon atoms, such as methyl, ethyl, n-propyl, isopropyl, t-butyl, n-octyl, eicosyl, 2-chloroethyl, 2-cyanoethyl, and 2-ethylhexyl groups), cycloalkyl groups (preferably substituted or unsubstituted cycloalkyl groups having 3 to 30 carbon atoms, such as cyclohexyl, cyclopentyl and 4-n-dodecylcyclohexyl groups), bicycloalkyl groups (preferably substituted or unsubstituted, monovalent bicycloalkyl groups having 5 to 30 carbon atoms provided by eliminating one hydrogen atom from bicycloalkanes having 5 to 30 carbon atoms, such as bicyclo[1,2,2]heptane-2-yl and bicyclo[2,2,2]octane-3-yl groups), and polycyclic alkyl groups having more cyclic structures such as tricycloalkyl groups, alkyl groups in the flowing substituents (e.g. alkyl groups in alkylthio groups) having the same meanings; alkenyl groups, which may be linear, branched, or cyclic and may be substituted or unsubstituted, including noncyclic alkenyl groups (preferably substituted or unsubstituted alkenyl groups having 2 to 30 carbon atoms, such as vinyl, allyl, prenyl, geranyl, and oleyl groups), cycloalkenyl groups (preferably substituted or unsubstituted, monovalent cycloalkenyl groups having 3 to 30 carbon atoms provided by eliminating one hydrogen atom from cycloalkenes having 3 to 30 carbon atoms, such as 2-cyclopentene-1-yl and 2-cyclohexene-1-yl groups), and bicycloalkenyl groups (preferably substituted or unsubstituted, monovalent bicycloalkenyl groups having 5 to 30 carbon atoms provided by eliminating one hydrogen atom from bicycloalkenes having a double bond, such as bicyclo[2,2,1]hept-2-ene-1-yl and bicyclo[2,2,2]oct-2-ene-4-yl groups); alkynyl groups (preferably substituted or unsubstituted alkynyl groups having 2 to 30 carbon atoms, such as ethynyl, propargyl, and trimethylsilylethynyl groups); aryl groups (preferably substituted or unsubstituted aryl groups having 6 to 30 carbon atoms, such as phenyl, p-tolyl, naphtyl, m-chlorophenyl, and o-hexadecanoylaminophenyl groups); heterocyclic groups (preferably monovalent groups provided by eliminating one hydrogen atom form 5- or 6-membered, substituted or unsubstituted, aromatic or nonaromatic, heterocyclic compounds, more preferably 5- or 6-membered aromatic heterocyclic groups having 3 to 30 carbon atoms, such as 2-furyl, 2-thienyl, 2-pyrimidinyl, and 2-benzothiazolyl groups); a cyano group; a hydroxyl group; a nitro group; a carboxyl group; alkoxy groups (preferably substituted or unsubstituted alkoxy groups having 1 to 30 carbon atoms, such as methoxy, ethoxy, isopropoxy, t-butoxy, n-octyloxy, and 2-methoxyethoxy groups); aryloxy groups (preferably substituted or unsubstituted aryloxy groups having 6 to 30 carbon atoms, such as phenoxy, 2-methylphenoxy, 4-t-butylphenoxy, 3-nitrophenoxy, and 2-tetradecanoylaminophenoxy groups); silyloxy groups (preferably silyloxy groups having 3 to 20 carbon atoms, such as trimethylsilyloxy and t-butyldimethylsilyloxy groups); heterocyclyloxy groups (preferably substituted or unsubstituted heterocyclyloxy groups having 2 to 30 carbon atoms, such as 1-phenyltetrazole-5-oxy and 2-tetrahydropyranyloxy groups); acyloxy groups (preferably a formyloxy group, substituted or unsubstituted alkylcarbonyloxy groups having 2 to 30 carbon atoms, and substituted or unsubstituted arylcarbonyloxy groups having 6 to 30 carbon atoms, such as formyloxy, acetyloxy, pivaloyloxy, stearoyloxy, benzoyloxy, and p-methoxyphenylcarbonyloxy groups); carbamoyloxy groups (preferably substituted or unsubstituted carbamoyloxy groups having 1 to 30 carbon atoms, such as N,N-dimethylcarbamoyloxy, N,N-diethylcarbamoyloxy, morpholinocarbonyloxy, N,N-di-n-octylaminocarbonyloxy, and N-n-octylcarbamoyloxy groups); alkoxycarbonyloxy groups (preferably substituted or unsubstituted alkoxycarbonyloxy groups having 2 to 30 carbon atoms, such as methoxycarbonyloxy, ethoxycarbonyloxy, t-butoxycarbonyloxy, and n-octylcarbonyloxy groups); aryloxycarbonyloxy groups (preferably substituted or unsubstituted aryloxycarbonyloxy groups having 7 to 30 carbon atoms, such as phenoxycarbonyloxy, p-methoxyphenoxycarbonyloxy, and p-n-hexadecyloxyphenoxycarbonyloxy groups); amino groups (preferably an amino group, substituted or unsubstituted alkylamino groups having 1 to 30 carbon atoms, and substituted or unsubstituted anilino groups having 6 to 30 carbon atoms, such as amino, methylamino, dimethylamino, anilino, N-methyl-anilino, and diphenylamino groups); acylamino groups (preferably a formylamino group, substituted or unsubstituted alkylcarbonylamino groups having 1 to 30 carbon atoms, and substituted or unsubstituted arylcarbonylamino groups having 6 to 30 carbon atoms, such as formylamino, acetylamino, pivaloylamino, lauroylamino, benzoylamino, and 3,4,5-tri-n-octyloxyphenylcarbonylamino groups); aminocarbonylamino groups (preferably substituted or unsubstituted aminocarbonylamino groups having 1 to 30 carbon atoms, such as carbamoylamino, N,N-dimethylaminocarbonylamino, N,N-diethylaminocarbonylamino, and morpholinocarbonylamino groups); alkoxycarbonylamino groups (preferably substituted or unsubstituted alkoxycarbonylamino groups having 2 to 30 carbon atoms, such as methoxycarbonylamino, ethoxycarbonylamino, t-butoxycarbonylamino, n-octadecyloxycarbonylamino, and N-methyl-methoxycarbonylamino groups); aryloxycarbonylamino groups (preferably substituted or unsubstituted aryloxycarbonylamino groups having 7 to 30 carbon atoms, such as phenoxycarbonylamino, p-chlorophenoxycarbonylamino, and m-n-octyloxyphenoxycarbonylamino groups); sulfamoylamino groups (preferably substituted or unsubstituted sulfamoylamino groups having 0 to 30 carbon atoms, such as sulfamoylamino, N,N-dimethylaminosulfonylamino, and N-n-octylaminosulfonylamino groups); alkyl or aryl sulfonylamino groups (preferably substituted or unsubstituted alkylsulfonylamino groups having 1 to 30 carbon atoms and substituted or unsubstituted arylsulfonylamino groups having 6 to 30 carbon atoms, such as methylsulfonylamino, butylsulfonylamino, phenylsulfonylamino, 2,3,5-trichlorophenylsulfonylamino, and p-methylphenylsulfonylamino groups); a mercapto group; alkylthio groups (preferably substituted or unsubstituted alkylthio groups having 1 to 30 carbon atoms, such as methylthio, ethylthio, and n-hexadecylthio groups); arylthio groups (preferably substituted or unsubstituted arylthio groups having 6 to 30 carbon atoms, such as phenylthio, p-chlorophenylthio, and m-methoxyphenylthio groups); heterocyclylthio groups (preferably substituted or unsubstituted heterocyclylthio groups having 2 to 30 carbon atoms, such as 2-benzothiazolylthio and 1-phenyltetrazole-5-ylthio groups); sulfamoyl groups (preferably substituted or unsubstituted sulfamoyl groups having 0 to 30 carbon atoms, such as N-ethylsulfamoyl, N-(3-dodecyloxypropyl)sulfamoyl, N,N-dimethylsulfamoyl, N-acetylsulfamoyl, N-benzoylsulfamoyl, and N-(N'-phenylcarbamoyl)sulfamoyl groups); a sulfo group; alkyl or aryl sulfinyl groups (preferably substituted or unsubstituted alkylsulfinyl groups having 1 to 30 carbon atoms and substituted or unsubstituted arylsulfinyl groups having 6 to 30 carbon atoms, such as methylsulfinyl, ethylsulfinyl, phenylsulfinyl, and p-methylphenylsulfinyl groups); alkyl or aryl sulfonyl groups (preferably substituted or unsubstituted alkylsulfonyl groups having 1 to 30 carbon atoms and substituted or unsubstituted arylsulfonyl groups having 6 to 30 carbon atoms, such as methylsulfonyl, ethylsulfonyl, phenylsulfonyl, and p-methylphenylsulfonyl groups); acyl groups (preferably a formyl group, substituted or unsubstituted alkylcarbonyl groups having 2 to 30 carbon atoms, substituted or unsubstituted arylcarbonyl groups having 7 to 30 carbon atoms, and substituted or unsubstituted heterocyclylcarbonyl groups having 4 to 30 carbon atoms and a heterocycle containing a carbon atom bonded to a carbonyl group, such as acetyl, pivaloyl, 2-chloroacetyl, stearoyl, benzoyl, p-n-octyloxyphenylcarbonyl, 2-pyridylcarbonyl, and 2-furylcarbonyl groups); aryloxycarbonyl groups (preferably substituted or unsubstituted aryloxycarbonyl groups having 7 to 30 carbon atoms, such as phenoxycarbonyl, o-chlorophenoxycarbonyl, m-nitrophenoxycarbonyl, and p-t-butylphenoxycarbonyl groups); alkoxycarbonyl groups (preferably substituted or unsubstituted alkoxycarbonyl groups having 2 to 30 carbon atoms, such as methoxycarbonyl, ethoxycarbonyl, t-butoxycarbonyl, and n-octadecyloxycarbonyl groups); carbamoyl groups (preferably substituted or unsubstituted carbamoyl groups having 1 to 30 carbon atoms, such as carbamoyl, N-methylcarbamoyl, N,N-dimethylcarbamoyl, N,N-din-octylcarbamoyl, and N-(methylsulfonyl)carbamoyl groups); aryl or heterocyclyl azo groups (preferably substituted or unsubstituted arylazo groups having 6 to 30 carbon atoms and substituted or unsubstituted heterocyclylazo groups having 3 to 30 carbon atoms, such as phenylazo, p-chlorophenylazo, and 5-ethylthio-1,3,4-thiadiazole-2-yl azo groups imide groups (preferably N-succinimide and N-phthalimide groups); phosphino groups (preferably substituted or unsubstituted phosphino groups having 2 to 30 carbon atoms, such as dimethylphosphino, diphenylphosphino, and methylphenoxyphosphino groups); phosphinyl groups (preferably substituted or unsubstituted phosphinyl groups having 2 to 30 carbon atoms, such as phosphinyl, dioctyloxyphosphinyl, and diethoxyphosphinyl groups); phosphinyloxy groups (preferably substituted or unsubstituted phosphinyloxy groups having 2 to 30 carbon atoms, such as diphenoxyphosphinyloxy and dioctyloxyphosphinyloxy groups); phosphinylamino groups (preferably substituted or unsubstituted phosphinylamino groups having 2 to 30 carbon atoms, such as dimethoxyphosphinylamino and dimethylaminophosphinylamino groups); and silyl groups (preferably substituted or unsubstituted silyl groups having 3 to 30 carbon atoms, such as trimethylsilyl, t-butyldimethylsilyl, and phenyldimethylsilyl groups).

A hydrogen atom in the above functional groups may further be substituted by the functional groups. Examples of such substituents include alkylcarbonylaminosulfonyl groups, arylcarbonylaminosulfonyl groups, alkylsulfonylaminocarbonyl groups, and arylsulfonylaminocarbonyl groups. Specific examples thereof include a methylsulfonylaminocarbonyl group, a p-methylphenylsulfonylaminocarbonyl group, an acetylaminosulfonyl group, and a benzoylaminosulfonyl group.

Each of X, X¹, and X² is preferably a substituted or unsubstituted aryl group having 6 to 20 carbon atoms, a substituted or unsubstituted alkyloxycarbonyl group having 2 to 10 carbon atoms, a substituted or unsubstituted aryloxycarbonyl group having 7 to 10 carbon atoms, a substituted or unsubstituted alkylaminocarbonyl group having 2 to 10 carbon atoms, a substituted or unsubstituted arylaminocarbonyl group having 7 to 10 carbon atoms, a substituted or unsubstituted alkylsulfonyl group having 1 to 10 carbon atoms, a substituted or unsubstituted arylsulfonyl group having 6 to 10 carbon atoms, or a cyano group, more preferably a substituted or unsubstituted aryl group having 6 to 20 carbon atoms, a substituted or unsubstituted alkyloxycarbonyl group having 2 to 10 carbon atoms, a substituted or unsubstituted aryloxycarbonyl group having 7 to 10 carbon atoms, a substituted or unsubstituted alkylsulfonyl group having 1 to 10 carbon atoms, a substituted or unsubstituted arylsulfonyl group having 6 to 10 carbon atoms, or a cyano group, further preferably a substituted or unsubstituted alkyloxycarbonyl group having 2 to 10 carbon atoms, a substituted or unsubstituted aryloxycarbonyl group having 7 to 10 carbon atoms, a substituted or unsubstituted alkylsulfonyl group having 1 to 10 carbon atoms, a substituted or unsubstituted arylsulfonyl group having 6 to 10 carbon atoms, or a cyano group, and is particularly preferably a cyano group.

Examples of the substituents of R¹ may be the same as those of X, X¹, and X².

R¹ is preferably a hydrogen atom, a substituted or unsubstituted alkyl group having 1 to 10 carbon atoms, or a substituted or unsubstituted aryl group having 6 to 10 carbon atoms, and is more preferably a substituted or unsubstituted alkyl group having 1 to 10 carbon atoms or a substituted or unsubstituted aryl group having 6 to 10 carbon atoms in view of solubility. The alkyl group is preferably a branched alkyl group having 3 to 6 carbon atoms, more preferably a tertiary alkyl group having 4 to 6 carbon atoms.

Examples of the substituents R² may be the same as those of X, X¹, and X². The substituent is preferably a substituted or unsubstituted alkyl group having 1 to 10 carbon atoms, a substituted or unsubstituted aryl group having 6 to 10 carbon atoms, a substituted or unsubstituted alkoxy group having 1 to 10 carbon atoms, or a substituted or unsubstituted amino group having 0 to 10 carbon atoms, more preferably a substituted or unsubstituted alkyl group having 1 to 10 carbon atoms, a substituted or unsubstituted alkoxy group having 1 to 10 carbon atoms, or a substituted or unsubstituted amino group having 0 to 10 carbon atoms, further preferably a substituted or unsubstituted alkyl group having 1 to 10 carbon atoms, or a substituted or unsubstituted amino group having 0 to 10 carbon atoms, particularly preferably a substituted or unsubstituted amino group having 0 to 10 carbon atoms.

Among the general formulae (I-1) and (I-2), the general formula (I-1) is preferred. The azo dye of the general formula (I-1) is preferably represented by the general formula (1).

The above general formula (1) is described below. Q¹ represents an atomic group forming a heterocycle or a carbocycle. The heterocycle of Q¹ is not particularly limited and is formed by carbon atoms and a heteroatom such as an oxygen atom, a sulfur atom, or a nitrogen atom, and may be a pyrazole ring, a pyrrole ring, a furan ring, a thiophene ring, an imidazole ring, a thiazole ring, an isothiazole ring, an oxazole ring, an isoxazole ring, a pyridine ring, a pyrazine ring, a pyrimidine ring, a pyridazine ring, a 1,2,4-triazine ring, a ring represented by one of the following structural formulae (C-1) to (C-10), or the like. These rings may have a substituent.

When Q¹ forms carbocycle, the carbocycle is preferably a benzene ring, which may have a substituent. It is preferred that the carbocycle has a substituent from the viewpoint of increasing the solubility. In view of the sensitivity to a blue semiconductor laser light of 390 to 415 nm, the substituent on the carbocycle is preferably a group other than a hydroxyl group, alkyloxy groups, aryloxy groups, a thiol group, alkylthio groups, arylthio groups, amino groups, alkylamino groups, and arylamino groups among the examples of R¹. The substituent is preferably a halogen atom, a nitro group, a cyano group, a substituted or unsubstituted alkyl group having 1 to 10 carbon atoms, a substituted or unsubstituted aryl group having 6 to 20 carbon atoms, a substituted or unsubstituted acyl group having 2 to 10 carbon atoms, a substituted or unsubstituted alkoxycarbonyl group having 2 to 10 carbon atoms, a substituted or unsubstituted aryloxycarbonyl group having 7 to 10 carbon atoms, a substituted or unsubstituted alkylsulfonyl group having 1 to 10 carbon atoms, a substituted or unsubstituted arylsulfonyl group having 6 to 10 carbon atoms, or a substituted or unsubstituted alkoxysulfonyl group having 1 to 10 carbon atoms, more preferably a cyano group, a substituted or unsubstituted alkyl group having 1 to 10 carbon atoms, a substituted or unsubstituted aryl group having 6 to 20 carbon atoms, a substituted or unsubstituted acyl group having 2 to 10 carbon atoms, a substituted or unsubstituted alkoxycarbonyl group having 2 to 10 carbon atoms, a substituted or unsubstituted alkylsulfonyl group having 1 to 10 carbon atoms, or a substituted or unsubstituted arylsulfonyl group having 6 to 10 carbon atoms, further preferably a substituted or unsubstituted alkyl group having 1 to 10 carbon atoms, a substituted or unsubstituted acyl group having 2 to 10 carbon atoms, a substituted or unsubstituted alkoxycarbonyl group having 2 to 10 carbon atoms, or a substituted or unsubstituted alkylsulfonyl group having 1 to 10 carbon atoms.

The ring formed by Q¹ may be a benzene ring, a pyrazole ring, a pyrrole ring, a furan ring, a thiophene ring, an imidazole ring, a thiazole ring, an oxazole ring, an isothiazole ring, an isoxazole ring, a pyridine ring, a pyrazine ring, a pyrimidine ring, a pyridazine ring, or a ring represented by one of the following structural formulae (C-1) to (C-10) (in which each asterisk * represents a position bonding to the -N=N- group), and is preferably a benzene ring, a pyrazole ring, an imidazole ring, an isothiazole ring, an isoxazole ring, a pyridine ring, or a ring represented by one of the structural formulae (C-1) to (C-6), more preferably a benzene ring, a pyrazole ring, or a ring represented by one of the structural formulae (C-1) to (C-6), further preferably a benzene ring, a pyrazole ring, or a ring represented by one of the structural formulae (C-1) to (C-4).

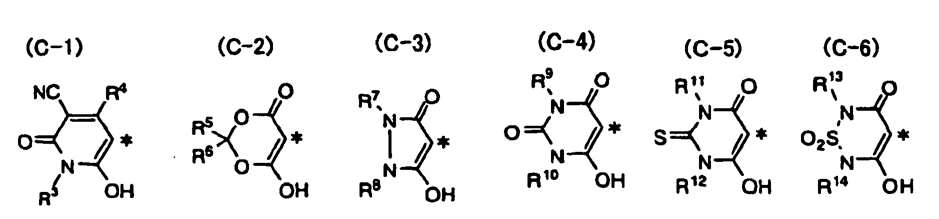

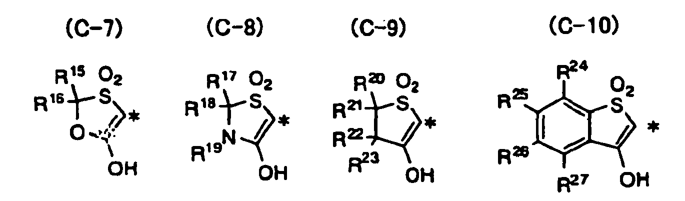

In the structural formulae (C-1) to (C-10), each asterisk * represents a position at which the ring is bonded to the azo group.

In the structural formulae (C-1) to (C-10), R³ to R²⁷, R³⁴, and R³⁵ independently represent a hydrogen atom or a substituent. The adjacent substituents may be bonded to form a ring. Examples of the substituents may be the same as those of X, X¹, and X². The substituent is preferably a substituted or unsubstituted alkyl group having 1 to 10 carbon atoms, or a substituted or unsubstituted aryl group having 6 to 10 carbon atoms, more preferably a substituted or unsubstituted alkyl group having 1 to 10 carbon atoms.

When Q¹ forms a pyrazole ring, a pyrrole ring, a furan ring, a thiophene ring, an imidazole ring, a thiazole ring, an oxazole ring, an isothiazole ring, an isoxazole ring, a pyridine ring, a pyrazine ring, a pyrimidine ring, or a pyridazine ring, these rings preferably have a substituent. Examples and preferred embodiments of the substituent are the same as those of the above-described substituent on the carbocycle.

Q³ independently represent a group forming a nitrogen-containing heterocycle. The nitrogen-containing heterocycle is not particularly limited, and may be a pyrazole ring, an imidazole ring, a thiazole ring, an oxazole ring, a 4,5-dihydroimidazole ring, a 4,5-dihydrooxazole ring, a 4,5-dihydrothiazole ring, a 1,2,4-thiadiazole ring, a 1,3,4-thiadiazole ring, a 1,2,4-triazole ring, a pyridine ring, a pyrazine ring, a pyrimidine ring, a pyridazine ring, a 1,3,5-triazine ring, or the like. These rings may have a substituent, and may form a condensed ring.

The nitrogen-containing heterocycle formed by Q³ is preferably a thiazole ring, an oxazole ring, a 1,2,4-thiadiazole ring, a 1,3,4-thiadiazole ring, a 1,2,4-triazole ring, a pyridine ring, a pyrazine ring, a pyrimidine ring, a pyridazine ring, or a 1,3,5-triazine ring, more preferably a thiazole ring, an oxazole ring, a pyridine ring, a pyrazine ring, a pyrimidine ring, a pyridazine ring, or a 1,3,5-triazine ring, further preferably a thiazole ring, a pyridine ring, a pyrazine ring, or a 1,3,5-triazine ring, particularly preferably a thiazole ring or a pyridine ring.

Y represents a group capable of coordinating to a metal ion. Y may be a group having an active hydrogen, such as a hydroxyl group, a thiol group, an amino group, a carboxyl group, or a sulfonic acid group, though not restrictive.

Preferred examples of Y include a hydroxyl group; amino groups (preferably an amino group, substituted or unsubstituted alkylamino groups having 1 to 30 carbon atoms, and substituted or unsubstituted anilino groups having 6 to 30 carbon atoms, such as amino, methylamino, dimethylamino, anilino, N-methyl-anilino, and diphenylamino groups); acylamino groups (preferably a formylamino group, substituted or unsubstituted alkylcarbonylamino groups having 1 to 30 carbon atoms, and substituted or unsubstituted arylcarbonylamino groups having 6 to 30 carbon atoms, such as formylamino, acetylamino, pivaloylamino, lauroylamino, benzoylamino, and 3,4,5-tri-n-octyloxyphenylcarbonylamino groups); aminocarbonylamino groups (preferably substituted or unsubstituted aminocarbonylamino groups having 1 to 30 carbon atoms, such as carbamoylamino, N,N-dimethylaminocarbonylamino, N,N-diethylaminocarbonylamino, and morpholinocarbonylamino groups); alkoxycarbonylamino groups (preferably substituted or unsubstituted alkoxycarbonylamino groups having 2 to 30 carbon atoms, such as methoxycarbonylamino, ethoxycarbonylamino, t-butoxycarbonylamino, n-octadecyloxycarbonylamino, and N-methyl-methoxycarbonylamino groups); aryloxycarbonylamino groups (preferably substituted or unsubstituted aryloxycarbonylamino groups having 7 to 30 carbon atoms, such as phenoxycarbonylamino, p-chlorophenoxycarbonylamino, and m-n-octyloxyphenoxycarbonylamino groups); sulfamoylamino groups (preferably substituted or unsubstituted sulfamoylamino groups having 0 to 30 carbon atoms, such as sulfamoylamino, N,N-dimethylaminosulfonylamino, and N-n-octylaminosulfonylamino groups); and alkyl or aryl sulfonylamino groups (preferably substituted or unsubstituted alkylsulfonylamino groups having 1 to 30 carbon atoms and substituted or unsubstituted arylsulfonylamino groups having 6 to 30 carbon atoms, such as methylsulfonylamino, butylsulfonylamino, phenylsulfonylamino, 2,3,5-trichlorophenylsulfonylamino, and p-methylphenylsulfonylamino groups). When Y is an amino group having a substituent, the amino group is preferably a substituted or unsubstituted anilino group having 6 to 30 carbon atoms, a substituted or unsubstituted acylamino group having 2 to 30 carbon atoms, a substituted or unsubstituted arylcarbonylamino group having 6 to 30 carbon atoms, a substituted or unsubstituted aminocarbonylamino group having 1 to 30 carbon atoms, a substituted or unsubstituted alkoxycarbonylamino group having 2 to 30 carbon atoms, a substituted or unsubstituted aryloxycarbonylamino group having 7 to 30 carbon atoms, a substituted or unsubstituted sulfamoylamino group having 0 to 30 carbon atoms, a substituted or unsubstituted alkylsulfonylamino group having 1 to 30 carbon atoms, or a substituted or unsubstituted arylsulfonylamino group having 6 to 30 carbon atoms, more preferably a substituted or unsubstituted acylamino group having 2 to 30 carbon atoms, a substituted or unsubstituted arylcarbonylamino group having 6 to 30 carbon atoms, a substituted or unsubstituted aminocarbonylamino group having 1 to 30 carbon atoms, a substituted or unsubstituted alkoxycarbonylamino group having 2 to 30 carbon atoms, a substituted or unsubstituted sulfamoylamino group having 0 to 30 carbon atoms, or a substituted or unsubstituted alkylsulfonylamino group having 1 to 30 carbon atoms, further preferably a substituted or unsubstituted acylamino group having 2 to 30 carbon atoms, a substituted or unsubstituted alkoxycarbonylamino group having 2 to 30 carbon atoms, or a substituted or unsubstituted alkylsulfonylamino group having 1 to 30 carbon atoms, particularly preferably a substituted or unsubstituted acylamino group having 2 to 30 carbon atoms or a substituted or unsubstituted alkoxycarbonylamino group having 2 to 30 carbon atoms.

When Y is an amino group having a substituent, the substituent may preferably be bonded to the atomic group of Q¹ to form a ring. The ring may be a 5-membered ring containing 1 to 3 nitrogen atoms or a 6-membered ring containing 1 to 4 nitrogen atoms, and is preferably a 5-membered ring containing 2 or 3 nitrogen atoms, more preferably a 5-membered ring containing 3 nitrogen atoms. Preferred examples of the 5-membered rings containing 3 nitrogen atoms include condensed rings in the general formulae (3) and (4).

Specific examples of the azo dyes represented by the general formula (I-1) or (1) are illustrated below without intention of restricting the scope of the present invention.

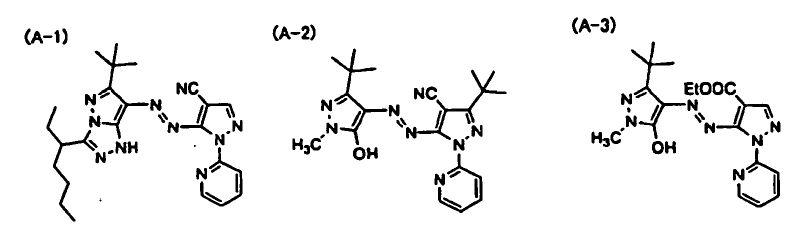

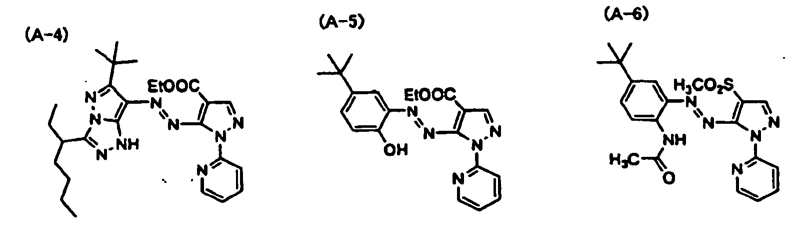

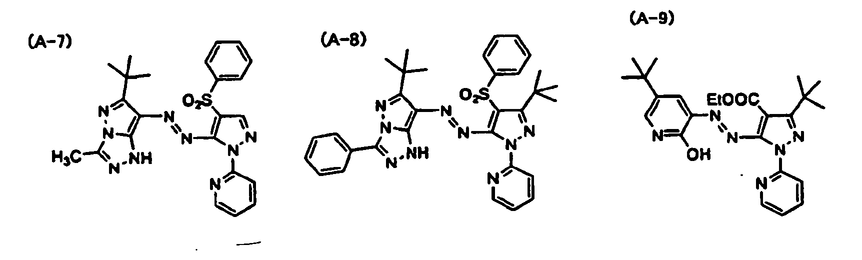

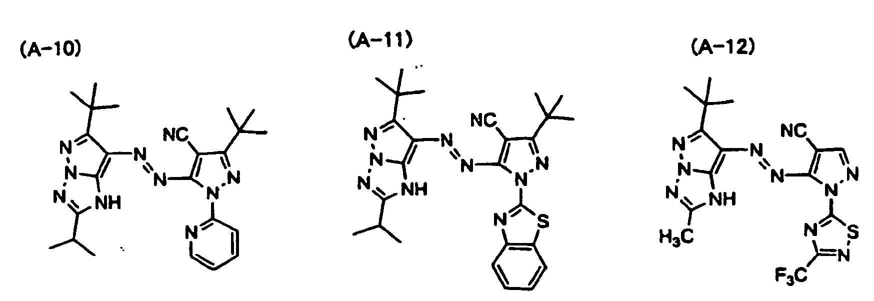

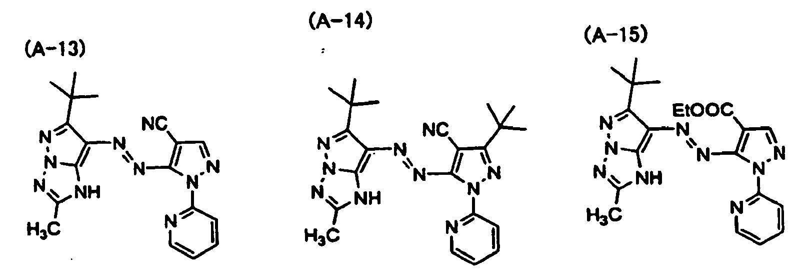

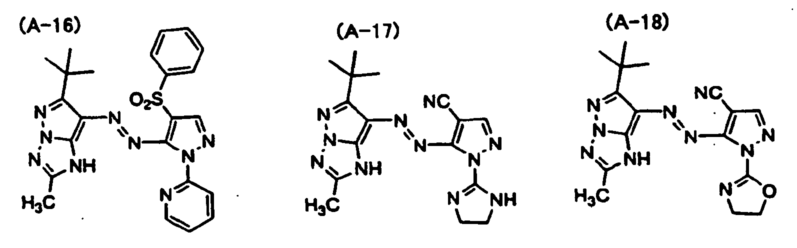

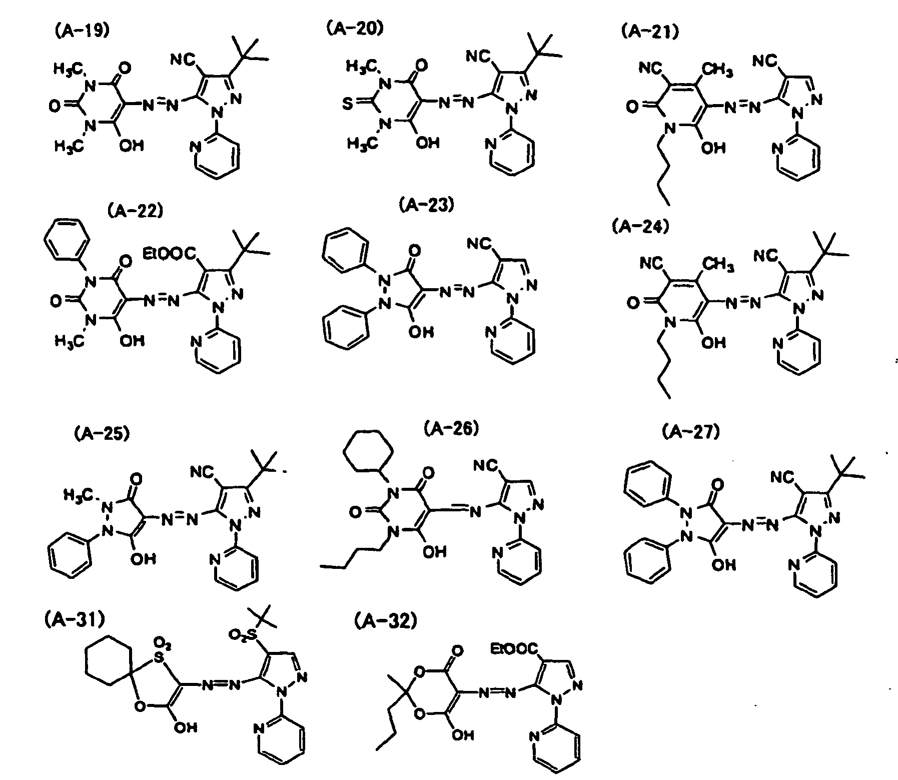

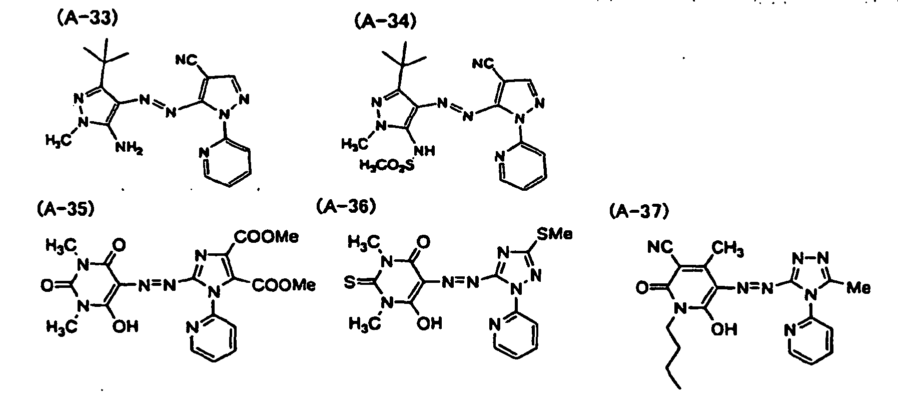

Specific examples of the azo dyes represented by the general formula (I-2) are illustrated below without intention of restricting the scope of the present invention.

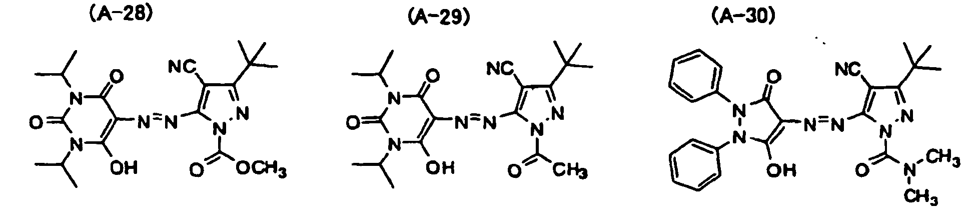

The general formula (2) is described below.

### General formula (2)

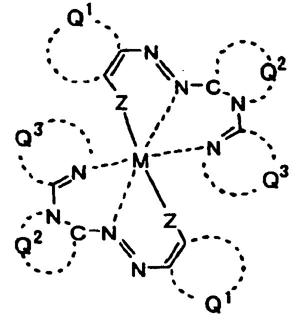

In the general formula (2), M represents a metal ion (or a metal oxide ion). The meanings and preferred embodiments of the metal ion are as described above.

The meanings and preferred embodiments of Q¹, Q², and Q³ in the general formula (2) are the same as those in the general formula (1).

Z represents a group provided by eliminating a hydrogen atom from Y, and thus, Y is ZH. For example, when -Y is - OH, -Z- is -O-. Preferred embodiments of Z correspond to those of Y.

The azo-metal complex dye of the general formula (2) is preferably represented by the following general formula (3) or (4). The general formula (4) is particularly preferred from the viewpoint of the light fastness.

### General formula (3)

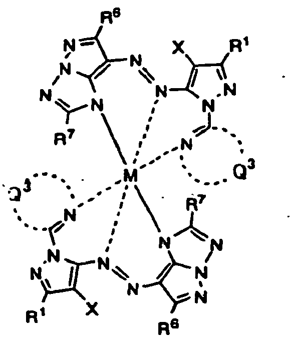

### General formula (4)

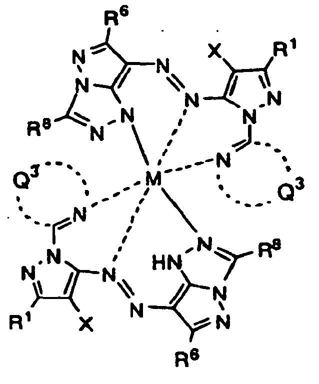

The general formulae (3) and (4) are described below. The meanings and preferred embodiments of X, R¹, and Q³ are as described above.

Each of R⁶ to R⁸ is a hydrogen atom or a substituent, and preferably a substituent. The substituent is not particularly limited and examples thereof are the same as those of X, X¹, and X².

R⁶ is preferably a substituted or unsubstituted alkyl group having 1 to 10 carbon atoms, a substituted or unsubstituted aryl group having 6 to 20 carbon atoms, a substituted or unsubstituted alkoxy group having 1 to 10 carbon atoms, a substituted or unsubstituted aryloxy group having 6 to 20 carbon atoms, a substituted or unsubstituted acyl group having 2 to 10 carbon atoms, a substituted or unsubstituted alkoxycarbonyl group having 2 to 10 carbon atoms, or a substituted or unsubstituted alkylsulfonyl group having 1 to 10 carbon atoms, more preferably a substituted or unsubstituted alkyl group having 1 to 8 carbon atoms, or a substituted or unsubstituted aryl group having 6 to 15 carbon atoms, further preferably a substituted or unsubstituted alkyl group having 1 to 6 carbon atoms. Further, the alkyl group is preferably a branched alkyl group having 3 to 6 carbon atoms, more preferably a tertiary alkyl group having 4 to 6 carbon atoms.

Each of R⁷ and R⁸ is preferably a substituent. The substituent preferably a substituted or unsubstituted alkyl group having 1 to 10 carbon atoms, or a substituted or unsubstituted aryl group having 6 to 20 carbon atoms, more preferably a substituted or unsubstituted alkyl group having 1 to 6 carbon atoms.

Specific examples of the azo-metal complex dyes of the present invention are illustrated below without intention of restricting the scope of the present invention.

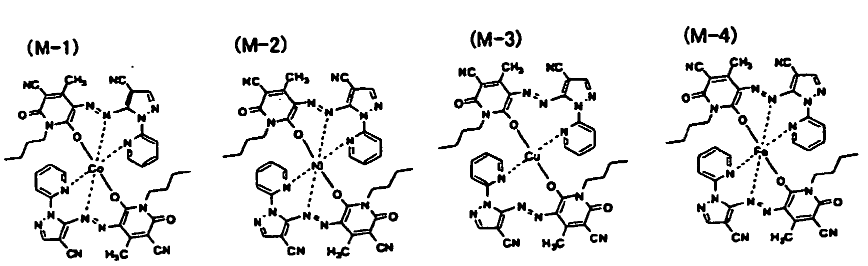

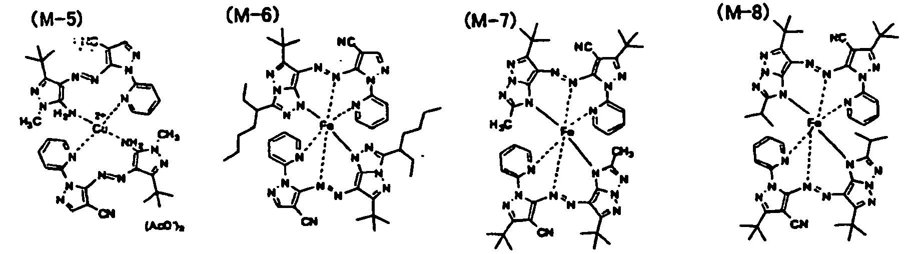

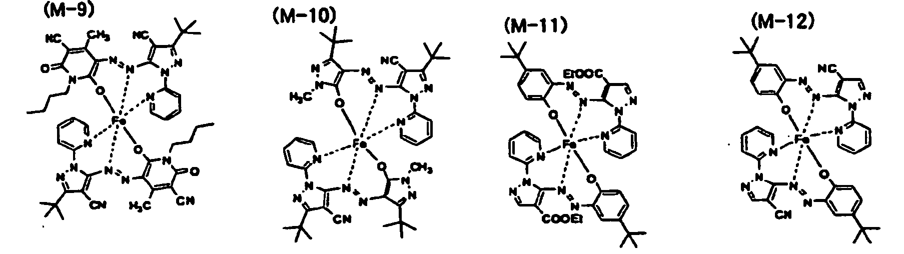

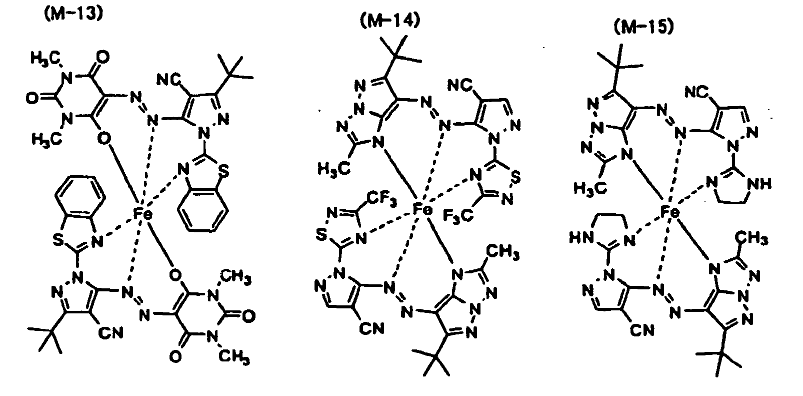

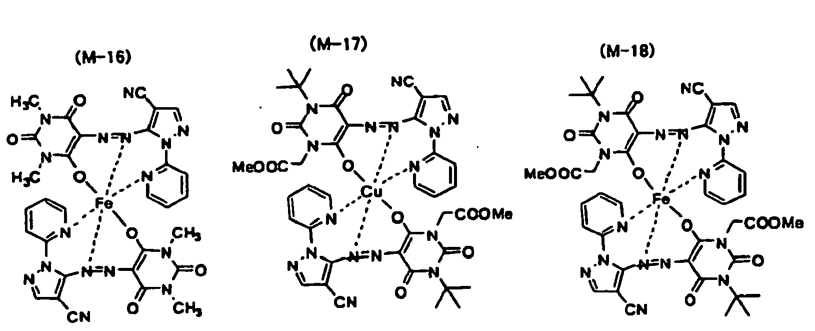

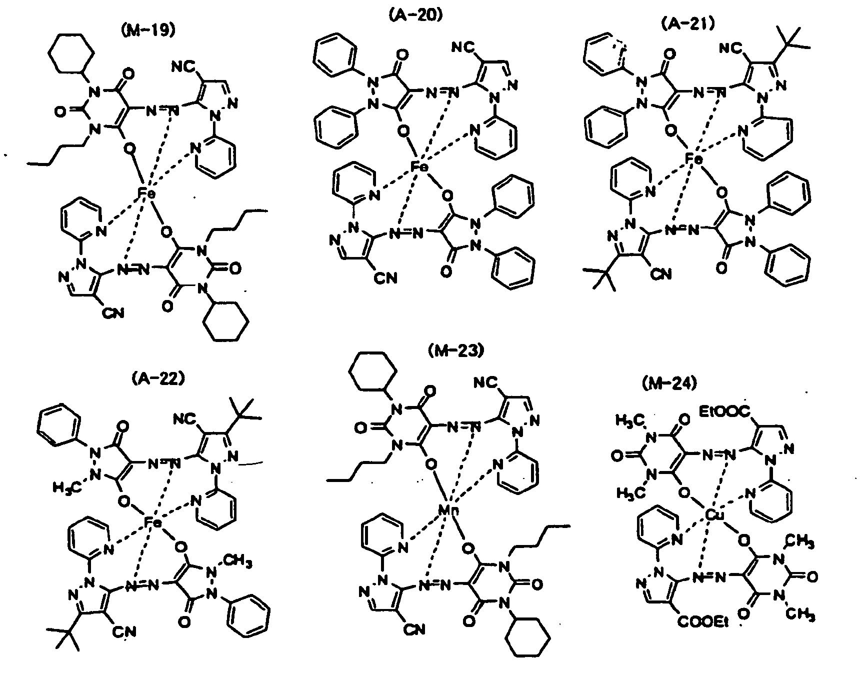

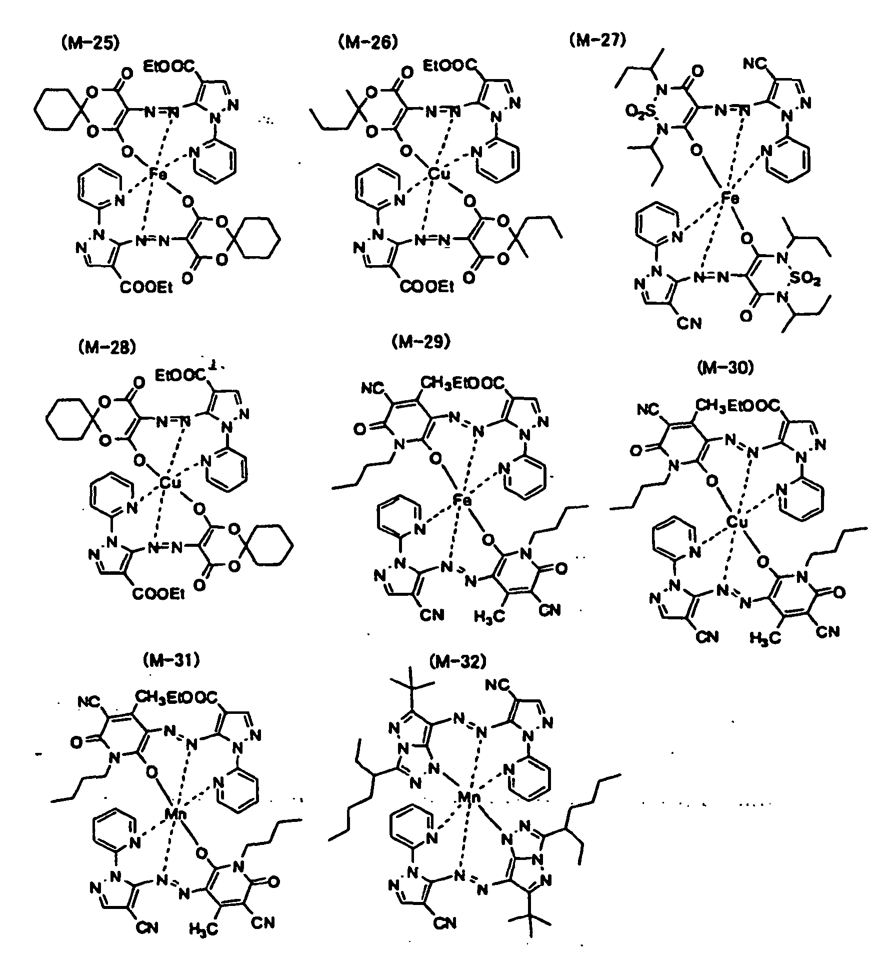

The components of the optical information recording medium of the present invention are described below.

Embodiments (1) and (2) are described as preferred embodiments of the optical information recording medium according to the present invention. Embodiment (1): An optical information recording medium containing a dye-containing WORM-type recording layer and a cover layer having a thickness of 0.01 to 0.5 mm disposed in this order on a substrate having a thickness of 0.7 to 2 mm. Embodiment (2): An optical information recording medium containing a dye-containing WORM-type recording layer and a protective substrate having a thickness of 0.1 to 1.0 mm disposed in this order on a substrate having a thickness of 0.1 to 1.0 mm.

In Embodiment (1), it is preferred that the substrate has pregrooves with a track pitch of 50 to 500 nm, a groove width of 25 to 250 nm, and a groove depth of 5 to 150 nm. In Embodiment (2), it is preferred that the substrate has pregrooves with a track pitch of 200 to 500 nm, a groove width of 50 to 300 nm, a groove depth of 30 to 150 nm, and a wobble amplitude of 5 to 50 nm.

### [Optical information recording medium of Embodiment (1)]

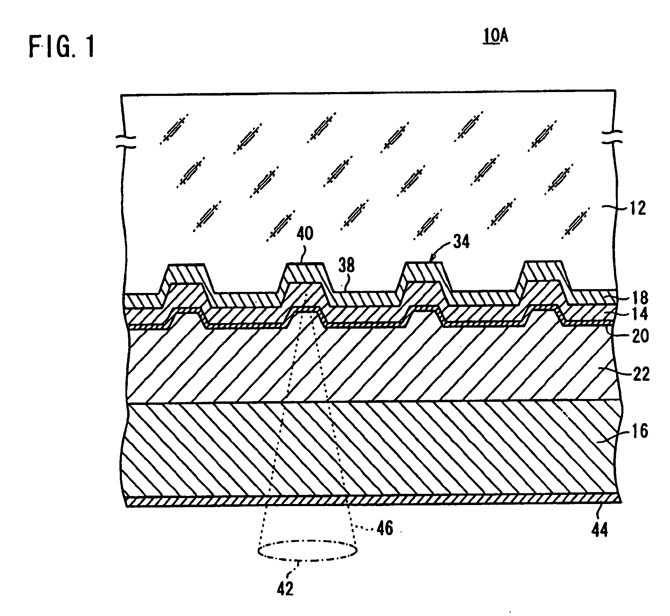

The optical information recording medium of Embodiment (1) has the substrate, the WORM-type recording layer, and the cover layer. A specific example of the optical information recording medium of Embodiment (1) is shown in FIG. 1.

As shown in FIG. 1, a first optical information recording medium 10A has a substrate 12, and has a light reflection layer 18, a WORM-type recording layer 14, a barrier layer 20, an adhesion layer or sticking layer 22, and a cover layer 16 disposed in this order on the substrate 12.

The components are described below.

### Substrate 12

In Embodiment (1), the substrate 12 has pregrooves 34 (guide grooves) with particular track pitch, groove width (half width), groove depth, and wobble amplitude to be hereinafter described. The pregrooves 34 are formed in order to achieve a recording density higher than those of CD-R and DVD-R, and are suitable for optical information recording media using bluish purple laser lights.

The track pitch of the pregrooves 34 is 50 to 500 nm. The track pitch is preferably 420 nm or less, more preferably 370 nm or less, further preferably 330 nm or less. Further, the track pitch is preferably 100 nm or more, more preferably 200 nm or more, further preferably 260 nm or more. When the track pitch is 50 nm or more, the pregrooves can be formed accurately to prevent crosstalk. When the track pitch is 500 nm or less, high-density recording can be achieved.

The track pitch of the pregrooves is preferably 100 to 420 nm, more preferably 200 to 370 nm, further preferably 260 to 330 nm.

The groove width (the half width, which is a width at half the groove depth) of each pregroove 34 is 25 to 250 nm. The groove width is preferably 240 nm or less, more preferably 230 nm or less, further preferably 220 nm or less. Further, the groove width is preferably 50 nm or more, more preferably 80 nm or more, further preferably 100 nm or more. When the groove width of the pregroove 34 is 25 nm or more, the groove can sufficiently be transferred in a forming process, and the error rate can be reduced in a recording process. When the groove width is 250 nm or less, the groove can be sufficiently transferred in a forming process, and a pit formed in a recording process can be reduced to prevent crosstalk.

The groove width (the half width) of each pregroove is preferably 50 to 240 nm, more preferably 80 to 230 nm, further preferably 100 to 220 nm.

The groove depth of each pregroove 34 is 5 to 150 nm. The groove depth is preferably 85 nm or less, more preferably 80 nm or less, further preferably 75 nm or less. Further, the groove depth is preferably 10 nm or more, more preferably 20 nm or more, further preferably 28 nm or more. When the groove depth of the pregroove 34 is 5 nm or more, a sufficient recording modulation can be obtained. When the groove depth is 150 nm or less, a high reflectance can be obtained.

The groove depth of each pregroove is preferably 10 to 85 nm, more preferably 20 to 80 nm, further preferably 28 to 75 nm.

The groove inclination angle of each pregroove 34 is preferably 80° or less, more preferably 75° or less, further preferably 70° or less, particularly preferably 65° or less. Further, the groove inclination angle is preferably 20° or more, more preferably 30° or more, further preferably 40° or more.

When the groove inclination angle of the pregroove 34 is 20° or more, a sufficient tracking error signal amplitude can be obtained. When the groove inclination angle is 80° or less, excellent formability can be achieved.

### WORM-type recording layer 14

In Embodiment (1), the WORM-type recording layer 14 may be formed by the steps of dissolving a dye in a solvent together with or without a binder, etc., to prepare a coating liquid, applying the coating liquid to the substrate or the light reflection layer 18, and drying the applied coating layer. The WORM-type recording layer 14 may have a single- or multi-layer structure, and the step of applying a coating liquid is repeatedly carried out to form such a multilayer structure.

The concentration of the dye in the coating liquid is generally 0.01% to 15% by mass, preferably 0.1% to 10% by mass, more preferably 0.5% to 5% by mass, most preferably 0.5% to 3% by mass.

Examples of the solvents for preparing the coating liquid include esters such as butyl acetate, ethyl lactate, and cellosolve acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methylcyclohexane; ethers such as tetrahydrofuran, ethyl ether, and dioxane; alcohols such as ethanol, n-propanol, isopropanol, n-butanol, and diacetone alcohol; fluorine-containing solvents such as 2,2,3,3-tetrafluoro-1-propanol; and glycol ethers such as ethylene glycol monomethyl ether, ethylene glycol monoethyl ether, and propylene glycol monomethyl ether.

The solvents may be used singly or as a mixture of two or more in view of the solubility of the dye. Various additives such as binders, antioxidants, UV absorbers, plasticizers, and lubricants may be added to the coating liquid in accordance with the purpose.

Examples of methods for applying the coating liquid include spray methods, spin coating methods, dipping methods, roll coating methods, blade coating methods, doctor roll methods, and screen printing methods. Preferred among them are spin coating methods.

In the applying step, the temperature of the coating liquid is preferably 23°C to 50°C, more preferably 24°C to 40°C.

On a land 38 (a convex portion of the substrate 12), the thickness of the WORM-type recording layer 14 is preferably 300 nm or less, more preferably 250 nm or less, further preferably 200 nm or less, particularly preferably 180 nm or less. Further, the thickness is preferably 1 nm or more, more preferably 3 nm or more, further preferably 5 nm or more, particularly preferably 7 nm or more.

On a groove 40 (a concave portion of the substrate 12), the thickness of the WORM-type recording layer 14 is preferably 400 nm or less, more preferably 300 nm or less, further preferably 250 nm or less. Further, the thickness is preferably 10 nm or more, more preferably 20 nm or more, further preferably 25 nm or more.

The ratio of the thickness of the WORM-type recording layer 14 on the land 38 to the thickness of the WORM-type recording layer 14 on the groove 40 is preferably 0.1 or more, more preferably 0.13 or more, further preferably 0.15 or more, particularly preferably 0.17 or more. The ratio is preferably less than 1, more preferably 0.9 or less, further preferably 0.85 or less, particularly preferably 0.8 or less.

An anti-fading agent may be added to the WORM-type recording layer 14 to increase the light fastness of the layer. In general, the anti-fading agent is a singlet oxygen quencher. The light fastness can be further improved by adding the singlet oxygen quencher in the present invention. The singlet oxygen quencher may be selected from those described in known publications such as patent publications.

Specific examples of the singlet oxygen quenchers are described in Japanese Laid-Open Patent Publication Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492; Japanese Patent Publication Nos. 1-38680 and 6-26028; Germany Patent No. 350399; Nippon Kagakukaishi, 1992, October issue, Page 1141; etc.

The ratio of the anti-fading agent such as the singlet oxygen quencher to the dye is generally 0.1% to 50% by mass, preferably 0.5% to 45% by mass, further preferably 3% to 40% by mass, particularly preferably 5% to 25% by mass.

### Cover layer 16

In Embodiment (1), the cover layer 16 is formed on the WORM-type recording layer 14 or the barrier layer 20 as shown in FIG. 1 with the adhesion layer or sticking layer 22 therebetween.

The cover layer 16 is not particularly limited as far as it is a transparent film, and preferred examples of the materials for the transparent film include acrylic resins such as polycarbonates and polymethyl methacrylates; vinyl chloride resins such as polyvinyl chlorides and vinyl chloride copolymers; epoxy resins; amorphous polyolefins; polyesters; and cellulose triacetates. More preferred among them are polycarbonates and cellulose triacetates.

The term "transparent" means that the transmittance of a light for recording and reproducing is 80% or more.

Various additives may be added to the cover layer 16 as far as they do not interfere with the advantageous effects of the present invention. For example, the cover layer 16 may contain a UV absorber for blocking out lights with wavelengths of 400 nm or less and/or a dye for blocking out lights with wavelengths of 500 nm or more.

The surface physical properties of the cover layer 16 are preferably such that the surface roughness is 5 nm or less as both the 2- and 3-dimensional roughness parameters.

It is preferred that the birefringence of the cover layer 16 is 10 nm or less from the viewpoint of property of concentrating a light used for recording and reproducing.

The thickness of the cover layer 16 may be determined depending on the wavelength of a laser light 46 for recording and reproducing and NA. In the present invention, the thickness is preferably 0.01 to 0.5 mm, more preferably 0.05 to 0.12 mm.

The total thickness of the cover layer 16 and the adhesion layer or sticking layer 22 is preferably 0.09 to 0.11 mm, more preferably 0.095 to 0.105 mm.

A protective layer (such as a hard coat layer 44 shown in FIG. 1) may be formed on the cover layer 16 to prevent the light incident surface of the cover layer 16 from being scratched in the production of the optical information recording medium 10A.

To stick the cover layer 16 on the WORM-type recording layer 14 or barrier layer 20, the adhesion layer or sticking layer 22 may be formed between the layers.

The adhesion layer contains an adhesive, and preferred examples of the adhesives include UV curing resins, EB curing resins, and thermosetting resins.

In the case of using the UV curing resin as the adhesive, the UV curing resin may directly be applied onto the barrier layer. Alternatively, the UV curing resin may be dissolved in an appropriate solvent such as methyl ethyl ketone or ethyl acetate, and thus-obtained coating liquid may be added to a dispenser and applied therefrom to the barrier layer. It is preferred that the UV curing resin for the adhesion layer has a small cure shrinkage ratio from the viewpoint of preventing curling of the optical information recording medium. Examples of such UV curing resins include SD-640 available from Dainippon Ink and Chemicals, Inc.

Method for forming the adhesion layer is not particularly limited. The adhesion layer is preferably formed by the steps of applying an adhesive to a surface of the barrier layer 20 or the WORM-type recording layer 14 (a surface to be attached), placing the cover layer 16 thereon, spreading the adhesive between the surface and the cover layer 16 uniformly by spin coating, and hardening the adhesive.

The thickness of the adhesion layer is preferably 0.1 to 100 µm, more preferably 0.5 to 50 µm, further preferably 1 to 30 µm.

The sticking layer contains a sticking agent, and examples thereof include acrylate-, rubber-, or silicone-based sticking agents. The acrylate-based sticking agents are preferred from the viewpoints of transparency and durability. The acrylate-based sticking agent is preferably a copolymer of a main component such as 2-ethylhexyl acrylate or n-butyl acrylate with a short-chain component and a crosslinking point component for increasing cohesion force. The short-chain component is an alkyl acrylate or methacrylate such as methyl acrylate, ethyl acrylate, or methyl methacrylate, and the crosslinking point component may be acrylic acid, methacrylic acid, an acrylamide derivative, maleic acid, hydroxylethyl acrylate, glycidyl acrylate, or the like. By appropriately selecting the mixing ratio and types of the main component, the short-chain component, and the crosslinking point component, the glass-transition temperature (Tg) and the crosslinking density of the sticking agent can be controlled. The glass-transition temperature (Tg) is preferably 0°C or lower, more preferably -15°C or lower, and particularly preferably -25°C or lower.

The glass-transition temperature (Tg) is measured by the Differential Scanning Calorimetry (DSC) with DSC6200R available from Seiko Instruments Inc.

The sticking agent is prepared by a method disclosed in Japanese Patent Laid-Open Publication Nos. 2003-217177, 2003-203387 and 9-147418.

Method for forming the sticking layer is not particularly limited, and the sticking layer may be formed by the steps of applying the sticking agent uniformly to a surface of the barrier layer 20 or the WORM-type recording layer 14 (a surface to be attached), placing the cover layer 16 thereon, and hardening the sticking agent. Alternatively, the sticking layer may be formed by the steps of applying the sticking agent uniformly to one surface of the cover layer 16 to form a sticking agent coating, sticking the coating on the surface, and hardening the coating.

A commercially-available sticking film containing a cover layer 16 and a sticking layer may be used in the present invention.

The thickness of the sticking layer is preferably 0.1 to 100 µm, more preferably 0.5 to 50 µm, further preferably 10 to 30 µm.

The cover layer 16 may be formed by a spin coating method using a UV curing resin. Other layers

The optical information recording medium 10A of Embodiment (1) may have another layer in addition to the essential layers as far as it does not interfere with the advantageous effects of the present invention. Examples of such layers include a label layer having an image, formed on the back surface of the substrate 12 (the side opposite to the surface on which the WORM-type recording layer 14 is formed); a light reflection layer 18 (to be hereinafter described in detail), formed between the substrate 12 and the WORM-type recording layer 14; a barrier layer 20 (to be hereinafter described in detail), formed between the WORM-type recording layer 14 and the cover layer 16; and an interface layer, formed between the light reflection layer 18 and the WORM-type recording layer 14. The label layer may be composed of an ultraviolet curing resin, a thermosetting resin, a heat-drying resin, or the like.

The above essential layers and additional layers may have a single- or multi-layer structure.

In the optical information recording medium 10A of Embodiment (1), it is preferred that the light reflection layer 18 is formed between the substrate 12 and the WORM-type recording layer 14 to increase the reflectance to the laser light 46 and to improve the recording/reproducing properties.

For example, the light reflection layer 18 can be formed on the substrate 12 by vacuum-depositing, sputtering, or ion-plating a light reflective substance having a high reflectance to the laser light 46.

The thickness of the light reflection layer 18 is generally 10 to 300 nm, preferably 30 to 200 nm.

The reflectance is preferably 70% or more.

Examples of the light reflective substances with high reflectance include metals of Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi, etc., metalloids, and stainless steels. These light reflective substances may be used singly or in combination, or as an alloy. The light reflective substance is preferably Cr, Ni, Pt, Cu, Ag, Au, Al, or a stainless steel, particularly preferably Au, Ag, Al, or an alloy thereof, most preferably Au, Ag, or an alloy thereof.

### Barrier layer 20 (intermediate layer)

As shown in FIG. 1, in the optical information recording medium 10A of Embodiment (1), the barrier layer 20 is preferably formed between the WORM-type recording layer 14 and the cover layer 16.

The barrier layer 20 can act to increase the storability of the WORM-type recording layer 14, increase the adhesion between the WORM-type recording layer 14 and the cover layer 16, control the reflectance, and control the heat conductivity.

The barrier layer 20 may be composed of any material that can transmit the light for recording and reproducing and can provide the above functions. In general, the material of the barrier layer 20 is preferably a dielectric substance having a low gas and water permeability.

Specific examples of the materials include nitrides, oxides, carbides, and sulfides of Zn, Si, Ti, Te, Sn, Mo, Ge, Nb, Ta, etc. The material of the barrier layer 20 is preferably MoO₂, GeO₂, TeO, SiO₂, TiO₂, ZnO, SnO₂, ZnO-Ga₂O₃, Nb₂O₅, or Ta₂O₅, more preferably SnO₂, ZnO-Ga₂O₃, SiO₂, Nb₂O₅, or Ta₂O₅.

The barrier layer 20 can be formed by a vacuum film forming method such as vacuum deposition, DC sputtering, RF sputtering, or ion plating. The barrier layer 20 is preferably formed by a sputtering method.

The thickness of the barrier layer 20 is preferably 1 to 200 nm, more preferably 2 to 100 nm, further preferably 3 to 50 nm.

### [Optical information recording medium of Embodiment (2)]

The optical information recording medium of Embodiment (2) has the substrate, the WORM-type recording layer, and the protective substrate, and is preferably a laminate type recording medium. Typical layer structures of the optical information recording medium are as follows:
(1) a first layer structure, where a WORM-type recording layer, a light reflection layer, and an adhesion layer are formed in this order on a substrate, and a protective substrate is disposed on the adhesion layer;
(2) a second layer structure, where a WORM-type recording layer, a light reflection layer, a protective layer, and an adhesion layer are formed in this order on a substrate, and a protective substrate is disposed on the adhesion layer;
(3) a third layer structure, where a WORM-type recording layer, a light reflection layer, a protective layer, an adhesion layer, and a protective layer are formed in this order on a substrate, and a protective substrate is disposed on the protective layer;
(4) a fourth layer structure, where a WORM-type recording layer, a light reflection layer, a protective layer, an adhesion layer, a protective layer, and a light reflection layer are formed in this order on a substrate, and a protective substrate is disposed on the light reflection layer;
(5) a fifth layer structure, where a WORM-type recording layer, a light reflection layer, an adhesion layer, and a light reflection layer are formed in this order on a substrate, and a protective substrate is disposed on the light reflection layer.

The above first to fifth layer structures are considered to be illustrative, and the layer structure of the optical information recording medium is not limited thereto. A part of the first to fifth layer structures may be replaced or omitted. The WORM-type recording layer may be formed also on the protective substrate. In such a case, the resultant optical information recording medium is capable of recording and reproducing on the both surfaces. Each of the above-described layers may have a single- or multi-layer structure.

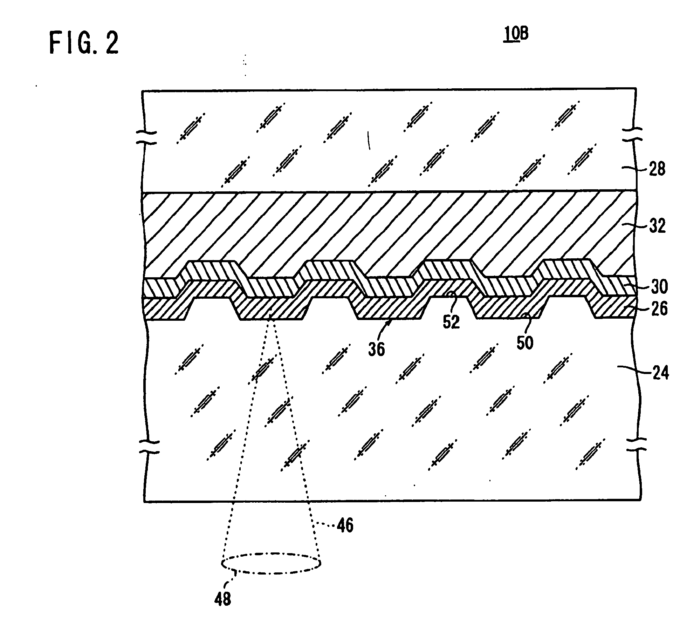

An example of the optical information recording medium of Embodiment (2), which contains a substrate, a WORM-type recording layer, a light reflection layer, an adhesion layer, and a protective substrate in this order, is described in detail below. The optical information recording medium having such a structure is shown in FIG. 2. The second optical information recording medium 10B shown in FIG. 2 has a second substrate 24, and a second WORM-type recording layer 26, a second light reflection layer 30, an adhesion layer 32, and a protective substrate 28 are disposed in this order on the second substrate 24.

### Substrate 24

In Embodiment (2), the substrate 24 has pregrooves 36 (guide grooves) with particular track pitch, groove width (half width), groove depth, and wobble amplitude to be hereinafter described. The pregrooves 36 are formed in order to achieve a recording density higher than those of CD-R and DVD-R, and are suitable for optical information recording media using bluish purple laser lights.

The track pitch of the pregrooves 36 is 200 to 500 nm. The track pitch is preferably 450 nm or less, more preferably 430 nm or less. Further, the track pitch is preferably 300 nm or more, more preferably 330 nm or more further preferably 370 nm or more. When the track pitch is 200 nm or more, the pregrooves can be formed accurately to prevent crosstalk. When the track pitch is 500 nm or less, high-density recording can be achieved.

The groove width (the half width) of each pregroove 36 is 50 to 300 nm. The groove width is preferably 290 nm or less, more preferably 280 nm or less, further preferably 250 nm or less. Further, the groove width is preferably 100 nm or more, more preferably 120 nm or more, further preferably 140 nm or more. When the groove width of the pregroove 36 is 50 nm or more, the groove can sufficiently be transferred in a forming process, and the error rate can be reduced in a recording process. When the groove width is 300 nm or less, a pit formed in a recording process can be reduced to prevent crosstalk, and a sufficient modulation can be achieved.

The groove depth of each pregroove 36 is 30 to 150 nm. The groove depth is preferably 140 nm or less, more preferably 130 nm or less, further preferably 120 nm or less. Further, the groove depth is preferably 40 nm or more, more preferably 50 nm or more, further preferably 60 nm or more. When the groove depth of the pregroove 36 is 30 nm or more, a sufficient recording modulation can be obtained. When the groove depth is 150 nm or less, a high reflectance can be obtained.

The thickness of the substrate 24 is generally 0.1 to 1.0 mm, preferably 0.2 to 0.8 nm, more preferably 0.3 to 0.7 mm.

An undercoat layer may be formed on a surface of the substrate 24, on which the WORM-type recording layer 26 is formed, to improve flatness and adhesion.

Examples of materials of the undercoat layer include polymers such as polymethyl methacrylates, acrylic acid-methacrylic acid copolymers, styrene-maleic anhydride copolymers, polyvinyl alcohols, N-methylolacrylamide, styrene-vinyltoluene copolymers, chlorosulfonated polyethylenes, nitrocelluloses, polyvinyl chlorides, chlorinated polyolefins, polyesters, polyimides, vinyl acetate-vinyl chloride copolymers, ethylene-vinyl acetate copolymers, polyethylenes, polypropylenes, and polycarbonates, and surface modifying agents such as silane coupling agents.

The undercoat layer may be formed by dissolving or dispersing the material in an appropriate solvent, and by applying thus-obtained coating liquid to the substrate 24 by a coating method such as spin coating, dip coating, or extrusion coating.

The thickness of the undercoat layer is generally 0.005 to 20 µm, preferably 0.01 to 10 µm.

### WORM-type recording layer 26

The details of the WORM-type recording layer 26 used in Embodiment (2) are the same as those of the WORM-type recording layer 14 used in Embodiment (1).

### Light reflection layer 30

In Embodiment (2), the light reflection layer 30 may be formed on the WORM-type recording layer 26 to increase the reflectance to the laser light 46 and to improve the recording/reproducing properties. The details of the light reflection layer 30 used in Embodiment (2) are the same as those of the light reflection layer 18 used in Embodiment (1).

### Adhesion layer 32

In Embodiment (2), the adhesion layer 32 may be formed between the light reflection layer 30 and the protective substrate 28 to increase the adhesion between the light reflection layer 30 and the protective substrate 28.

The adhesion layer 32 is preferably composed of a light curing resin. It is preferred that the light curing resin has a small cure shrinkage ratio from the viewpoint of preventing curling of the resultant disk. Examples of such light curing resins include UV curing resins (UV curing adhesives) such as SD-640 and SD-661 available from Dainippon Ink and Chemicals, Inc.

The adhesion layer 32 preferably has a thickness of 1 to 1000 µm to maintain elasticity.

### Protective substrate 28

The material and shape of the protective substrate 28 (a dummy substrate) used in Embodiment (2) may be the same as those of the substrate 24. The thickness of the protective substrate 28 is generally 0.1 to 1.0 mm, preferably 0.2 to 0.8 mm, more preferably 0.3 to 0.7 mm.

### Protective layer

In the optical information recording medium 10B of Embodiment (2), a protective layer may be formed to physically and chemically protect the light reflection layer 30, the WORM-type recording layer 26, etc.

Examples of materials of the protective layer include inorganic substances such as ZnS, ZnS-SiO₂, SiO, SiO₂, MgF₂, SnO₂, and Si₃N₄, and organic substances such as thermoplastic resins, thermosetting resins, and UV curing resins.

For example, a plastic material may be extruded into a film and stuck on the light reflection layer by an adhesive to form the protective layer. The protective layer may be formed by vacuum deposition, sputtering, coating, or the like.

In the case of using a thermoplastic or thermosetting resin for the protective layer, the protective layer may be formed by dissolving the resin in an appropriate solvent and by applying and drying thus-obtained coating liquid. In the case of using a UV curing resin for the protective layer, the protective layer may be formed by applying the resin or a coating liquid containing the resin and an appropriate solvent, and by irradiating the applied resin with a UV light to harden the resin. Various additives such as antistatic agents, antioxidants, and UV absorbers may be added to these coating liquids in accordance with the purpose.

The protective layer generally has a thickness of 0.1 µm to 1 mm.

### Other layers

The optical information recording medium 10B of Embodiment (2) may have another layer in addition to the above layers as far as it does not interfere with the advantageous effects of the present invention. The details of such layers in Embodiment (2) are the same as those in Embodiment (1).

The present invention further relates to a method for recording information on the optical information recording medium having a substrate and a recording layer. In the information recording method of the present invention, the optical information recording medium of the present invention is irradiated with a laser light, to record information on the recording layer containing the azo-metal complex dye derived from a metal ion or a metal oxide ion and an azo dye represented by the general formula (I-1) or (I-2).

For example, information may be recorded on the above optical information recording media 10A and 10B according to Embodiments (1) and (2) in the following manner.

First the substrate side or the protective layer side of the optical information recording medium is irradiated with a recording light such as a semiconductor laser light while rotating the optical information recording medium at a constant linear speed (e.g. 0.5 to 10 m/second) or a constant angular speed. With the recording light, the optical properties of the recording medium are changed and the information is recorded in portions irradiated with the light. In the embodiment shown in FIG. 1, the recording laser light 46 such as a semiconductor laser light is applied to the cover layer 16 side through a first objective lens 42 (for example, having a numerical aperture NA of 0.85). When the recording medium is irradiated with the laser light 46, the WORM-type recording layer 14 absorbs the laser light 46 and heated locally, and the optical properties of the WORM-type recording layer 14 are physically or chemically changed, for example by generation of a pit, whereby the information is recorded thereon. In the embodiment shown in FIG. 2, in the same manner, the recording laser light 46 such as a semiconductor laser light is applied to the second substrate 24 side through a second objective lens 48 (for example, having a numerical aperture NA of 0.65). When the recording medium is irradiated with the laser light 46, the WORM-type recording layer 26 absorbs the laser light 46 and heated locally, and the optical properties of the WORM-type recording layer 26 are physically or chemically changed, for example by generation of a pit, whereby the information is recorded thereon.

In the present invention, it is preferred that the information is recorded by irradiation with a laser light 46 having a wavelength of 440 nm or less. The recording light is preferably a semiconductor laser light having an emission wavelength of 440 nm or less, further preferably a bluish purple semiconductor laser light having an emission wavelength of 390 to 415 nm, or a bluish purple SHG laser light having a center emission wavelength 425 nm obtained by treating a semiconductor infrared laser light having a center emission wavelength of 850 nm with an optical waveguide device. Further, it is preferred from the viewpoint of the recording density that the recording light is a bluish purple semiconductor laser light having an emission wavelength of 390 to 415 nm. The recorded information may be reproduced by irradiating the substrate side or the protective layer side of the optical information recording medium with a semiconductor laser light and by detecting the reflected light while rotating the recording medium at the above constant linear speed.

A method for synthesizing the compound of the present invention is described below.

A method described in Japanese Laid-Open Patent Publication Nos. 61-36362 and 2006-57076 may be used as a general method for synthesizing the azo dye represented by the general formula (1), though not restrictive. A typical example of the method for synthesizing the azo dye of the present invention, particularly the azo dye represented by the general formula (1), is illustrated below.

### [Synthesis example of azo dye represented by general formula (1)]

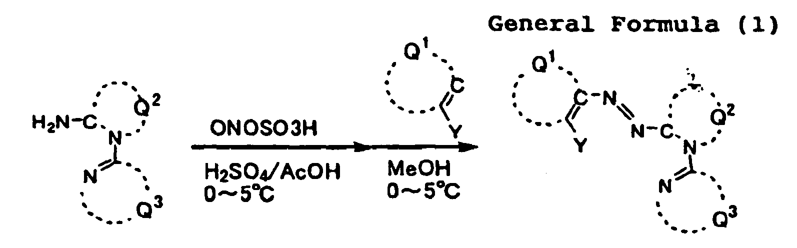

Methods described in Japanese Laid-Open Patent Publication Nos. 11-130970, 11-310728, and 2001-158862 may be used as a general method for reacting the azo dye with a metal ion to obtain the azo-metal complex dye, though not restrictive. Metal salts, reaction solvents, etc. used in the methods may be changed or modified. A typical example of the method for synthesizing the azo-metal complex dye of the present invention is illustrated below.

A synthesis example of the azo-metal complex dye from the azo dye represented by the general formula (1) and the metal ion (or the metal oxide or salt thereof) is shown in the following scheme. In the scheme, M represents a metal ion, X represents a halide ion, and n represents an integer. The reaction solvent is not limited to MeOH, and is preferably an alcohol in which the metal ion can be dissolved. A base may be added or not added to the reaction system. Each dotted line between M and N represents a coordinate bond. Even when M and N are not coordinate-bonded practically, the compound is considered as the same azo-metal complex dye.

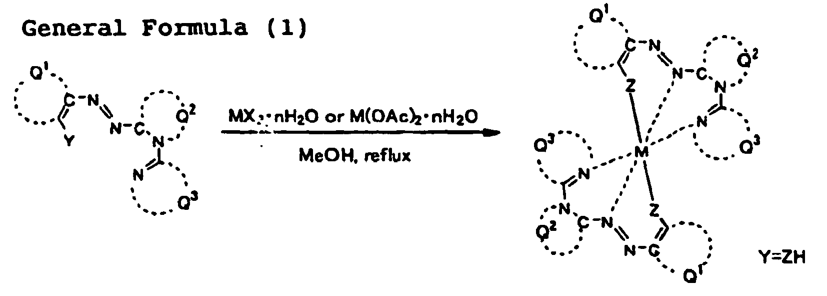

The present invention is more specifically described below with reference to Examples without intention of restricting the scope of the present invention.

### [Synthesis of compound (A-21)]

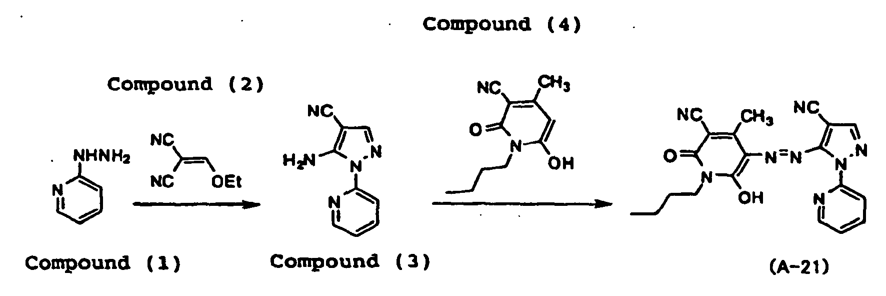

3 g of the compound (1), 3.36 g of the compound (2), and 30 ml of EtOH were added to a 100-ml eggplant-shaped flask, and refluxed under heating for 4 hours. The mixture was cooled to the room temperature, and the generated crystal was taken by filtration and washed with EtOH, to obtain 4.2 g of the compound (3). The obtained compound was identified by 300-MHz ¹H-NMR: ¹H-NMR (DMSO-d6) [ppm]; δ 8.47 (d), 8.1-8.2 (s), 8.04 (t), 7.79 (t), 7.34 (d).

Then, 2 ml of sulfuric acid was added to a 100-ml conical flask, and 9 ml of acetic acid was slowly added thereto under ice cooling. 1.4 ml of 40% nitrosylsulfuric acid was slowly added to the mixture, 1.2 g of the compound (3) was added thereto stepwise while maintaining the temperature at 0°C to 5°C, and the resultant mixture was stirred for 15 minutes. The acidic solution was added to 20 ml of a methanol solution containing 1.34 g of the compound (4) stepwise under ice cooling. The resultant liquid was stirred for 1 hour, cooled to the room temperature, and stirred for 2 hours. The generated precipitate was isolated by filtration and dried, to obtain 1.6 g of the compound (A-21). The obtained compound was identified by 300-MHz ¹H-NMR: ¹H-NMR (DMSO-d6) [ppm]; δ 8.64 (d), 8.40 (s), 8.18 (t), 8.04 (t), 7.57 (dd), 3.90 (t), 1.65-1.50 (m), 1.30-1.41 (m), 1.95 (t).

### [Synthesis of compounds (A-1) and (A-33)]

The compounds (A-1) and (A-33) were synthesized in the same manner as the compound (A-21).

The obtained compounds (A-1) and (A-33) were identified by 300-MHz ¹H-NMR.

Compound (A-1): ¹H-NMR (DMSO-d6) [ppm]; δ 8.37 (d), 8.10 (s), 7.87 (t), 7.62 (d), 7.34 (t), 2.93-2.82 (m), 1.76-1.50 (m), 1.13-0.09 (m), 0.63 (m).

Compound (A-33): ¹H-NMR (DMSO-d6) [ppm]; δ 8.62 (s), 8.55 (d), 8.29 (s), 8.16-8.07 (dd), 7.96 (d), 7.58-7.51 (dd), 3.54 (s), 1.40 (s).

The compounds (A-2), (A-4), (A-23), (A-24), (A-26), (A-27), and (A-32) were synthesized in the same manner.

### [Synthesis of compound (M-1)]

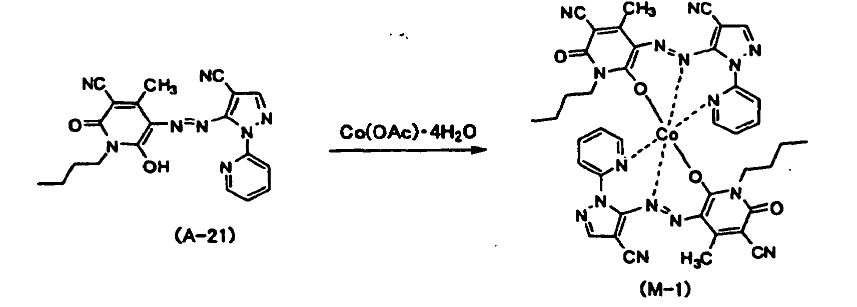

300 mg of the compound (A-21) and 10 ml of methanol were added to a 50-ml eggplant-shaped flask, and 0.31 ml of triethylamine was added thereto dropwise while stirring. The mixture was stirred for 10 minutes, 186 mg of Co(OAc)₂·4H₂O was added thereto, and the resultant mixture was refluxed under heating for 3 hours. The mixture was cooled to the room temperature, and the generated precipitate was isolated by filtration, washed with methanol, and dried, to obtain 0.28 g of the compound (M-1). The obtained compound was identified by MALDI-TOF-MS: [M-H⁺] = 863.

### [Synthesis of compound (M-2)]

The compound (M-2) was synthesized in the same manner as the compound (M-1) except for using Ni(OAc)₂·4H₂O instead of Co(OAc)₂·4H₂O in the reaction. The obtained compound was identified by MALDI-TOF-MS: [M-H⁺] = 862.

### [Synthesis of compound (M-3)]

The compound (M-3) was synthesized in the same manner as the compound (M-1) except for using Cu(OAc)₂·H₂O instead of Co(OAc)₂·4H₂O in the reaction. The obtained compound was identified by MALDI-TOF-MS: [M-H⁺] = 867.

### [Synthesis of compound (M-4)]

The compound (M-4) was synthesized in the same manner as the compound (M-1) except for using FeCl₂·4H₂O instead of Co(OAc)₂·4H₂O in the reaction. The obtained compound was identified by MALDI-TOF-MS: [M-H⁺] = 860.

The compounds (M-5), (M-6), (M-8), (M-9), (M-10), (M-11), (M-12), (M-13), (M-16), (M-17), (M-18), (M-19), (M-20), (M-21), (M-23), (M-26), (M-28), (M-29), (M-30), (M-31), and (M-32) were synthesized in the same manner as the compounds (M-1) to (M-4). The obtained compounds were identified by MALDI-TOF-MS or ESI-MS. Various azo-metal complex dyes according to the present invention can be synthesized in the same manner, and the compounds can be identified by MALDI-TOF-MS or ESI-MS.

### «Production of optical information recording medium» (Preparation of substrate 12)

A polycarbonate resin substrate having a thickness of 1.1 mm, an outer diameter of 120 mm, and an inner diameter of 15 mm, which had spiral pregrooves 34 with a track pitch of 320 nm, a groove width (a concave portion width) of 190 nm, a groove depth of 47 nm, a groove inclination angle of 65°, and a wobble amplitude of 20 nm, was prepared by injection forming. Mastering of a stamper used in the injection forming was carried out by using a laser cutting (351 nm).

### (Formation of light reflection layer 18)

A 60-nm-thick, ANC light reflection layer (containing 98.1 at% of Ag, 0.7 at% of Nd, and 0.9 at% of Cu) was formed as a vacuum-formed film on the substrate 12 by DC sputtering using CUBE manufactured by Unaxis in an Ar atmosphere. The thickness of the light reflection layer 18 was controlled by selecting the sputtering time.

### (Formation of WORM-type recording layer 14)

A dye-containing coating liquid was prepared by dissolving 1 g of the synthesized compound (M-1) in 100 ml of 2,2,3,3-tetrafluoropropanol. Then, the prepared dye-containing coating liquid was applied to the light reflection layer by a spin coating method under conditions of 23°C and 50%RH while changing the rotation rate within a range of 500 to 2,200 rpm, to form a WORM-type recording layer 14, which had a thickness of 40 nm on a groove portion 40 and a thickness of 15 nm on a land 38. WORM-type recording layers 14 were formed in this manner using the compounds (M-2), (M-3), (M-4), (M-6), (M-8), (M-9), (M-17), (M-26), (M-29), (M-30), (M-31), and (M-32), respectively.

The formed WORM-type recording layer 14 was subjected to an annealing treatment in a clean oven. In the annealing treatment, the substrate 12 was supported at 80°C for 1 hour by a vertical stack pole with a distance kept by a spacer.

### (Formation of barrier layer 20)

A 10-nm-thick, barrier layer 20 of Nb₂O₅ was formed on the WORM-type recording layer 14 by DC sputtering using CUBE manufactured by Unaxis in an Ar atmosphere.

### (Sticking of cover layer 16)

A polycarbonate film (PUREACE available from Teijin, 80-µm thick) having an inner diameter of 15 mm and an outer diameter of 120 mm was used as a cover layer 16. A sticking layer having a glass-transition temperature of -26°C was disposed on one side of the polycarbonate film such that the total thickness of the sticking layer and the polycarbonate film was 100 µm.

The cover layer 16 was placed on the barrier layer 20 such that the barrier layer 20 faced the sticking layer. Then, the cover layer 16 was pressed by a pressing member, to stick the cover layer 16 on the barrier layer 20. An optical information recording medium 10A having the layer structure shown in FIG. 1 was produced by the above processes.

Optical information recording media of Examples 1 to 13 were produced in this manner respectively.

### (Comparative Examples 1 to 4) Production of optical information recording media

Optical information recording media of Comparative Examples 1 to 4 were produced in the same manner as Example 1 except for using comparative compounds (A) to (D) instead of the compound (M-1) in the WORM-type recording layer 14. Comparative compound (A), described in Japanese Laid-Open Patent Publication No. 2001-158862 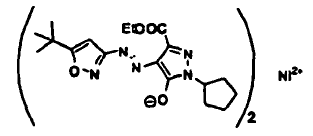 Comparative compound (B), described in Japanese Laid-Open Patent Publication No. 2001-158862 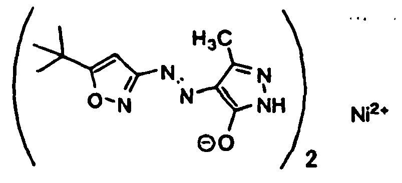 Comparative compound (C), described in Japanese Laid-Open Patent Publication No. 2006-142789 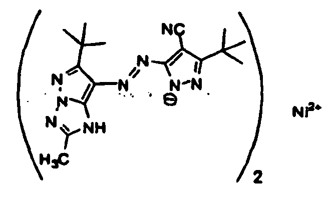 Comparative compound (D), described in Japanese Laid-Open Patent Publication No. 2001-306070

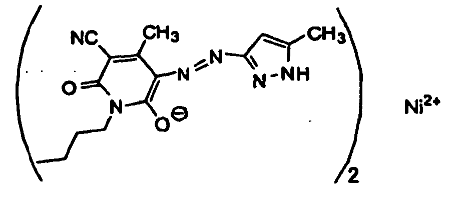

### <Evaluation of optical information recording medium>

### (1) Evaluation of C/N (carrier-to-noise ratio)

A 0.16-µm signal (2T) was recorded and reproduced in each of the produced optical information recording media by using a recording/reproducing evaluator (DDU1000 manufactured by Pulstec Industrial Co., Ltd.) having 403-nm laser and NA 0.85 pickup under conditions of a clock frequency of 66 MHz and a linear speed of 4.92 m/s. The recorded pit was reproduced by a spectrum analyzer (FSP-3 manufactured by Rohde & Schwarz). An output at 16 MHz after recording was used as Carrier output, an output at 16 MHz before recording was used as Noise output, and a C/N value was obtained by the output after recording - the output before recording. In this evaluation, the signal was recorded on the grooves by the optical information recording method of the present invention. Further, the recording power was 5 mW, and the reproducing power was 0.3 mW. The results are shown in Table 1. The 2T recording C/N ratio is used as a measure of recording properties. As the recording power is increased, the 2T recording C/N ratio is increased. When the C/N ratio (after recording) is 35 dB or more at approximately 5 mW, the recording medium has sufficient recording sensitivity and reproduced signal intensity, and thereby has satisfactory recording properties.

### (2) Evaluation of light fastness of dye film

The dye-containing coating liquids of Examples 1 to 13 and Comparative Examples 1 to 4 were prepared, and each coating liquid was applied to a 1.1-mm-thick glass plate by a spin coating method under conditions of 23°C and 50%RH while changing the rotation rate within a range of 500 to 1,000 rpm. The glass plate with the dye film was stored for 24 hours under conditions of 23°C and 50%RH, and then subjected to a light fastness test using a merry-go-round-type light fastness tester (Cell Tester Model III manufactured by Eagle Engineering, equipped with WG320 Filter manufactured by Schott). The absorption spectrum of the dye film was measured using UV-1600PC manufactured by SHIMADZU immediately before the light fastness test and 48 hours after the light fastness test, and the change of the absorbancy at the maximum absorption wavelength was evaluated.

**Table 1**

| | General formula | Azo dye | Light fastness of dye film⁽¹⁾ | Recording/reproducing properties (2T recording C/N)⁽²⁾ |
|---|---|---|---|---|
| Example 1 | (2) | (M-1) | Excellent | Excellent |
| Example 2 | (2) | (M-2) | Excellent | Excellent |
| Example 3 | (2) | (M-3) | Good | Excellent |
| Example 4 | (2) | (M-4) | Good | Excellent |
| Example 5 | (4) | (M-6) | Excellent | Good |
| Example 6 | (3) | (M-8) | Good | Good |
| Example 7 | (2) | (M-9) | Good | Excellent |
| Example 8 | (2) | (M-17) | Good | Excellent |
| Example 9 | (2) | (M-26) | Good | Excellent |
| Example 10 | (2) | (M-29) | Excellent | Good |
| Example 11 | (2) | (M-30) | Good | Excellent |
| Example 12 | (2) | (M-31) | Good | Good |
| Example 13 | (4) | (M-32) | Excellent | Good |
| Comparative Example 1 | - | Compound (A) | Fair | Good |
| Comparative Example 2 | - | Compound (B) | Poor | -⁽³⁾ |
| Comparative Example 3 | - | Compound (C) | Poor | Good |
| Comparative Example 4 | - | Compound (D) | -⁽³⁾ | -⁽³⁾ |

| | | | | |
|---|---|---|---|---|
| (1) Evaluated as "Excellent" when the residual dye ratio was 90% or more at absorption λmax 48 hours after the irradiation with the Xe light, evaluated as "Good" when the ratio was 85% or more and less than 90%, evaluated as "Fair" when the ratio was 75% or more and less than 85%, and evaluated as "Poor" when the ratio was less than 75%; (2) Evaluated as "Excellent" when the 2T recording C/N was 35 dB or more, evaluated as "Good" when the ratio was 30 dB or more and less than 35 dB, and evaluated as "Poor" when the ratio was less than 30 dB; and (3) Measurement or recording could not carried out because the recording layer could not sufficiently formed due to poor solubility. | | | | |

As shown in Table 1, the azo-metal complex dyes used in Examples 1 to 13 were more excellent in light fastness and recording/reproducing properties as compared with the conventional azo-metal complex dyes used in Comparative Examples 1 to 4. Further, each of the optical information recording media of Examples 1 to 5 and 7 was irradiated with a reproducing light continuously for 1 hour, and the 9T signal waveform (the voltage level) was observed. As a result, the 9T signals were changed only by 0% to 1% after reproducing for 1 hour. In contrast, the 9T signal of the comparative compound (C) was changed by 2% or more. It was clear from the comparison that the compounds of the present invention were excellent in the reproduction durability.

Furthermore, the azo-metal complex dyes of Examples according to the present invention had excellent solubility in the coating solvent, and had excellent stability in film.

### <Evaluation of light fastness of dye solution>

Each of the azo-metal complex dyes of Examples according to the present invention was dissolved in 2,2,3,3-tetrafluoropropanol such that the absorbancy was 0.95 to 1.05 (cell width of 1 cm). The light fastness of thus-obtained solution was evaluated in the same manner as the above dye films. As a result, all the solutions were remarkably excellent in light fastness, and had a residual dye ratio of 85% or more after 48 hours. The light fastness is an important property required for various applications. The azo-metal complex dye of the present invention shows excellent light fastness in film and solution, and thereby can show excellent functions in various applications of inks, color filters, color conversion filters, photographic materials, thermal transfer recording materials, and the like.

Further, the azo-metal complex dyes of Examples were not decomposed in the powder state and film state even at 150°C or higher. Thus, it is clear that the azo-metal complex dye of the present invention is excellent in thermal stability. The azo-metal complex dye of the present invention can show excellent functions in various applications of inks, color filters, color conversion filters, photographic materials, and the like.

## Claims

1. An optical information recording medium comprising a transparent, disc-shaped substrate having pregrooves with a track pitch of 50 to 500 nm, and a recording layer on which information is recorded by irradiation with a laser light having a wavelength of 440 nm or less, wherein
said recording layer comprises at least one azo-metal complex dye derived from a metal ion (or a metal oxide ion) and an azo dye represented by the following structural formula (I-1) or (I-2): 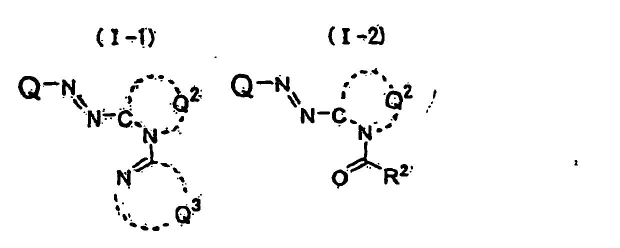 wherein Q represents a carbocyclic group or a heterocyclic group, Q² and Q³ independently represent an atomic group forming a nitrogen-containing heterocycle, and R² represents a substituent.

2. An optical information recording medium according to claim 1, wherein
said recording layer comprises at least one azo-metal complex dye derived from a metal ion (or a metal oxide ion) and an azo dye represented by the following general formula (1): 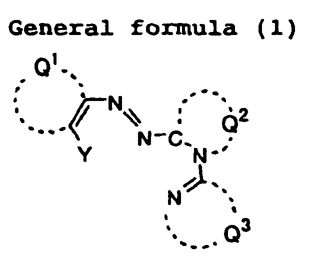 wherein Q¹ represents an atomic group forming a carbocycle or a heterocycle, Q² and Q³ independently represent an atomic group forming a nitrogen-containing heterocycle, and Y represents a group capable of coordinating to a metal ion.

3. An optical information recording medium according to claim 2, wherein
said nitrogen-containing heterocycle formed by Q² is represented by one of the following structural formulae (q-1) to (q-4): 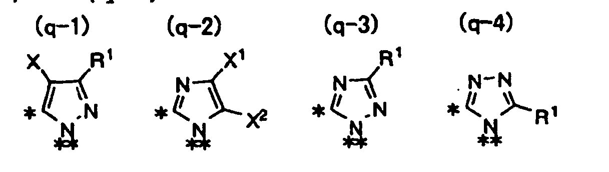 wherein each asterisk * represents a position at which the heterocycle is bonded to the -N=N- group, each double asterisk ** represents a position at which the heterocycle is bonded to said nitrogen-containing heterocycle formed by Q³ or the -COR² group, X, X¹, and X² independently represent a substituent, and R¹ represents a hydrogen atom or a substituent.

4. An optical information recording medium according to claim 3, wherein
said carbocycle or heterocycle formed by Q¹ is a benzene ring, a pyrazole ring, or a ring represented by one of the following structural formulae (C-1) to (C-4): 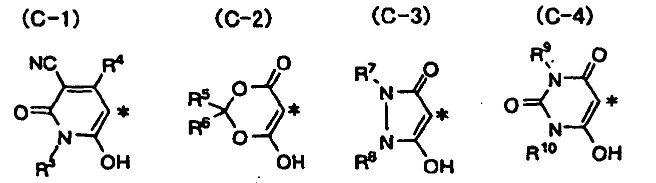 wherein each asterisk * represents a position at which the ring is bonded to the azo group (the -N=N- group), R³ to R¹⁰ independently represent a hydrogen atom or a substituent, and adjacent substituents may be bonded to form a ring, and
when said heterocycle formed by Q¹ is said ring represented by one of the structural formulae (C-1) to (C-4), said Y is the hydroxyl group in the structural formulae (C-1) to (C-4).

5. An optical information recording medium according to claim 3, wherein
said azo-metal complex dye is represented by the following general formula (2): 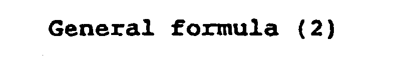 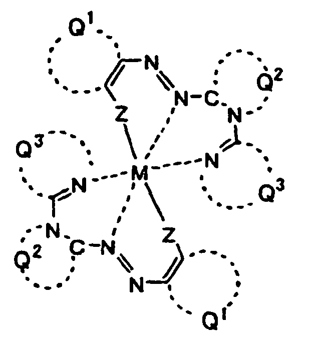 wherein M represents a metal ion (or a metal oxide ion), Q¹ represents an atomic group forming a carbocycle or a heterocycle, Q² and Q³ independently represent an atomic group forming a nitrogen-containing heterocycle, and Z represents a group provided by eliminating a hydrogen atom from said Y (Y = ZH).

6. An optical information recording medium according to claim 2, wherein
said carbocycle or heterocycle formed by Q¹ is a benzene ring, a pyrazole ring, or a ring represented by one of the following structural formulae (C-1) to (C-4): 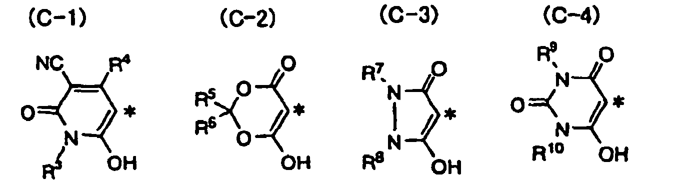 wherein each asterisk * represents a position at which the ring is bonded to the azo group (the -N=N- group), R³ to R¹⁰ independently represent a hydrogen atom or a substituent, and adjacent substituents may be bonded to form a ring, and
when said heterocycle formed by Q¹ is said ring represented by one of the structural formulae (C-1) to (C-4), said Y is the hydroxyl group in the structural formulae (C-1) to (C-4).

7. An optical information recording medium according to claim 6, wherein
said azo-metal complex dye is represented by the following general formula (2): 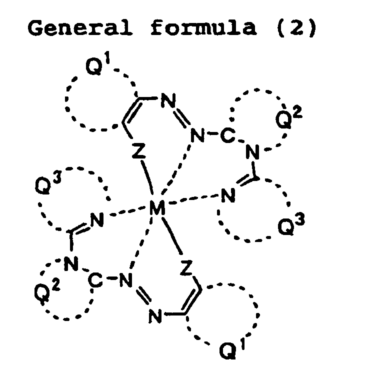 wherein M represents a metal ion (or a metal oxide ion), Q¹ represents an atomic group forming a carbocycle or a heterocycle, Q² and Q³ independently represent ah atomic group forming a nitrogen-containing heterocycle, and Z represents a group provided by eliminating a hydrogen atom from said Y (Y = ZH).

8. An optical information recording medium according to claim 7, wherein
said azo-metal complex dye is represented by the following general formula (3) or (4): 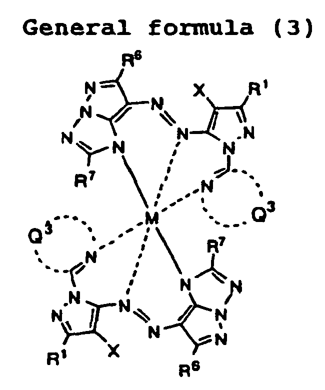 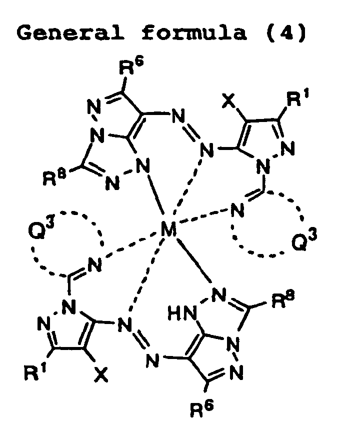 wherein M represents a metal ion (or a metal oxide ion), Q³ represents an atomic group forming a nitrogen-containing heterocycle, X represents a substituent, and R¹, R⁶, R⁷, and R⁸ independently represent a hydrogen atom or a substituent.

9. An optical information recording medium according to claim 2, wherein
said azo-metal complex dye is represented by the following general formula (2): 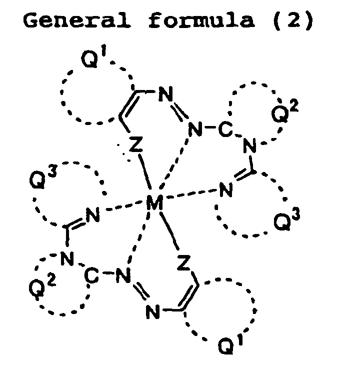 wherein M represents a metal ion (or a metal oxide ion), Q¹ represents an atomic group forming a carbocycle or a heterocycle, Q² and Q³ independently represent an atomic group forming a nitrogen-containing heterocycle, and Z represents a group provided by eliminating a hydrogen atom from said Y (Y = ZH).

10. An optical information recording medium according to claim 1, wherein
said nitrogen-containing heterocycle formed by Q² is represented by one of the following structural formulae (q-1) to (q-4): 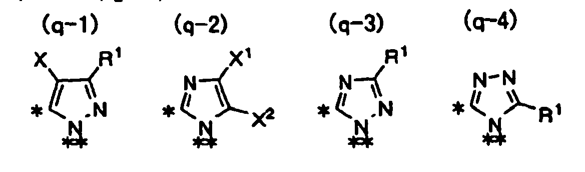 wherein each asterisk * represents a position at which the heterocycle is bonded to the -N=N- group, each double asterisk ** represents a position at which the heterocycle is bonded to said nitrogen-containing heterocycle formed by Q³ or the -COR² group, X, X¹, and X² independently represent a substituent, and R¹ represents a hydrogen atom or a substituent.

11. An optical information recording medium according to claim 1, wherein
said metal ion in said azo-metal complex dye is a copper ion, an iron ion, or a manganese ion.

12. An optical information recording medium according to claim 1, wherein
a reflection layer and a dye-containing recording layer are stacked in this order on a pregroove-formed surface of said substrate having pregrooves with a track pitch of 50 to 500 nm.

13. An azo-metal complex dye derived from a metal ion (or a metal oxide ion) and an azo dye represented by the following general formula (1): 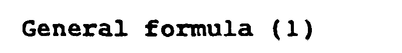 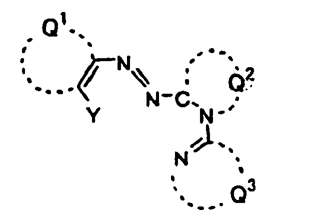 wherein Q¹ represents an atomic group forming a carbocycle or a heterocycle, Q² and Q³ independently represent an atomic group forming a nitrogen-containing heterocycle, and Y represents a group capable of coordinating to a metal ion.

## Patentansprüche

1. Optisches Informationsaufzeichnungsmedium aufweisend ein transparentes, scheibenförmiges Substrat mit Vorrillen mit einem Spurabstand von 50 bis 500 nm und eine Aufzeichnungsschicht, auf der Information durch Bestrahlung mit einem Laserlicht mit einer Wellenlänge von 440 nm oder weniger aufgezeichnet wird, wobei
die Aufzeichnungsschicht mindestens einen Azo-Metallkomplex-Farbstoff aufweist, der abgeleitet ist von einem Metallion (oder einem Metalloxidion) und einem Azofarbstoff, der dargestellt wird durch die folgende Strukturformel (1-1) oder (I-2): 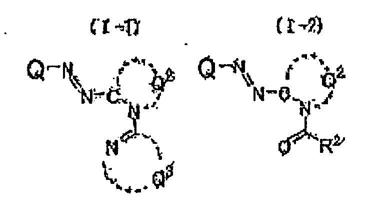 worin Q eine carbocyclische Gruppe oder eine heterocyclische Gruppe repräsentiert, Q² und Q³ unabhängig voneinander eine Atomgruppe, die einen Stickstoff-enthaltenden Heterocyclus bildet, repräsentieren, und R² einen Substituenten repräsentiert.

2. Optisches Informationsaufzeichnungsmedium nach Anspruch 1, bei dem
die Aufzeichnungsschicht mindestens einen Azo-Metallkomplex-Farbstoff aufweist, der abgeleitet ist von einem Metallion (oder einem Metalloxidion) und einem Azo-Farbstoff, der dargestellt wird durch die folgende allgemeine Formel (1): 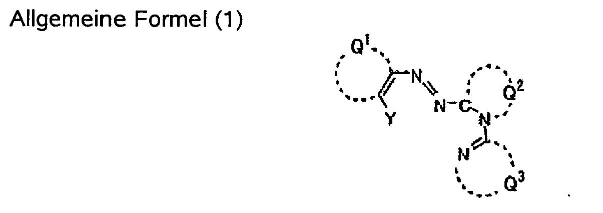 worin Q¹ eine Atomgruppe, die einen Carbocyclus oder einen Heterocyclus bildet, repräsentiert, Q² und Q³ unabhängig voneinander eine Atomgruppe, die einen Stickstoff-enthaltenden Heterocyclus bildet, repräsentieren, und Y eine Gruppe repräsentiert, die in der Lage ist, an ein Metallion zu koordinieren.

3. Optisches Informationsaufzeichnungsmedium nach Anspruch 2, bei dem
der durch Q² gebildete Stickstoff-enthaltende Heterocyclus dargestellt wird durch eine der folgenden Strukturformeln (q-1) bis (q-4): 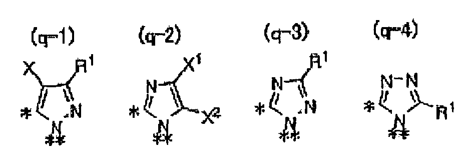 worin jedes Sternchen * eine Position repräsentiert, an der der Heterocyclus an die -N=N--Gruppe gebunden ist, jedes Doppelsternchen ** eine Position repräsentiert, an der der Heterocyclus an den Stickstoff-enthaltenden Heterocyclus, der durch Q³ oder die -COR²-Gruppe gebildet wird, gebunden ist, X, X¹ und X² unabhängig voneinander einen Substituenten repräsentieren, und R¹ ein Wasserstoffatom oder einen Substituenten repräsentiert.

4. Optisches Informationsaufzeichnungsmedium nach Anspruch 3, bei dem
der durch Q¹ gebildete Carbocyclus oder Heterocyclus ein Benzolring, ein Pyrazolring oder ein Ring ist, der durch eine der folgenden Strukturformeln (C-1) bis (C-4) dargestellt wird: 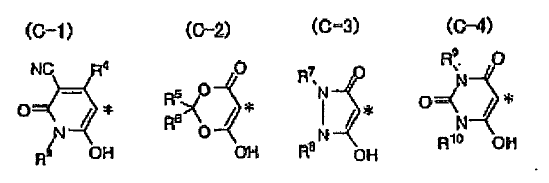 worin jedes Sternchen * eine Position repräsentiert, an der der Ring an die Azogruppe (die -N=N--Gruppe) gebunden ist, R³ bis R¹⁰ unabhängig voneinander ein Wasserstoffatom oder einen Substituenten repräsentieren und benachbarte Substituenten unter Bildung eines Rings verbunden werden können, und
wenn der durch Q¹ gebildete Heterocyclus der Ring ist, der durch eine der Strukturformeln (C-1) bis (C-4) dargestellt wird, das Y die Hydroxylgruppe in den Strukturformeln (C-1) bis (C-4) ist.

5. Optisches Informationsaufzeichnungsmedium nach Anspruch 3, bei dem
der Azo-Metallkomplex-Farbstoff dargestellt wird durch die folgende allgemeine Formel (2): 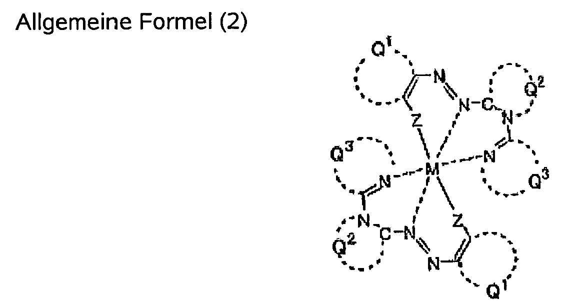 worin M ein Metallion (oder ein Metalloxidion) repräsentiert, Q¹ eine Atomgruppe, die einen Carbocyclus oder einen Heterocyclus bildet, repräsentiert, Q² und Q³ unabhängig voneinander eine Atomgruppe, die einen Stickstoff-enthaltenden Heterocyclus bildet, repräsentieren, und Z eine Gruppe repräsentiert, die durch Abspalten eines Wasserstoffatoms von dem Y (Y = ZH) geschaffen wird.

6. Optisches Informationsaufzeichnungsmedium nach Anspruch 2, bei dem
der durch Q¹ gebildete Carbocyclus oder Heterocyclus ein Benzolring, ein Pyrazolring oder ein Ring ist, der durch eine der folgenden Strukturformeln (C-1) bis (C-4) dargestellt wird: 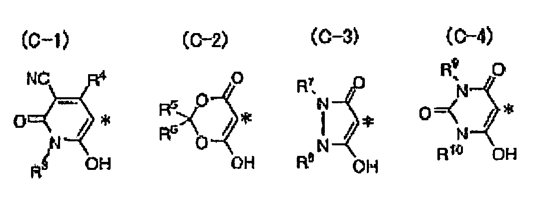 worin jedes Sternchen * eine Position repräsentiert, an der der Ring an die Azogruppe (die -N=N--Gruppe) gebunden ist, R³ bis R¹⁰ unabhängig voneinander ein Wasserstoffatom oder einen Substituenten repräsentieren, und benachbarte Substituenten unter Bildung eines Rings verbunden werden können, und
wenn der durch Q¹ gebildete Heterocyclus der Ring ist, der durch eine der Strukturformeln (C-1) bis (C-4) dargestellt wird, das Y die Hydroxylgruppe in den Strukturformeln (C-1) bis (C-4) ist.

7. Optisches Informationsaufzeichnungsmedium nach Anspruch 6, bei dem
der Azo-Metallkomplex-Farbstoff dargestellt wird durch die folgende allgemeine Formel (2): 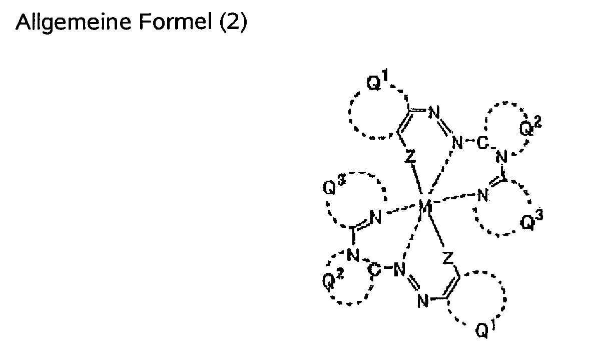 worin M ein Metallion (oder ein Metalloxidion) repräsentiert, Q¹ eine Atomgruppe, die einen Carbocyclus oder einen Heterocyclus bildet, repräsentiert, Q² und Q³ unabhängig voneinander eine Atomgruppe, die einen Stickstoff-enthaltenden Heterocyclus bildet, repräsentieren, und Z eine Gruppe repräsentiert, die durch Abspalten eines Wasserstoffatoms von dem Y (Y = ZH) geschaffen wird.

8. Optisches Informationsaufzeichnungsmedium nach Anspruch 7, bei dem
der Azo-Metallkomplex-Farbstoff dargestellt wird durch die folgende allgemeine Formel (3) oder (4): 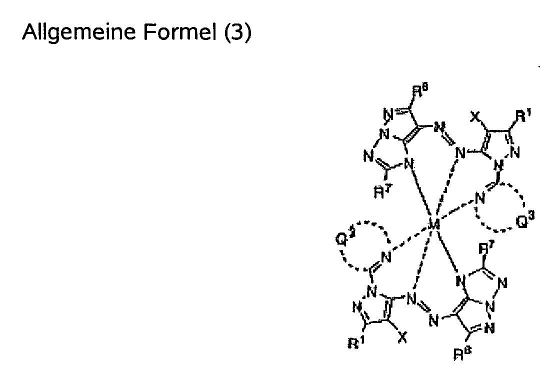 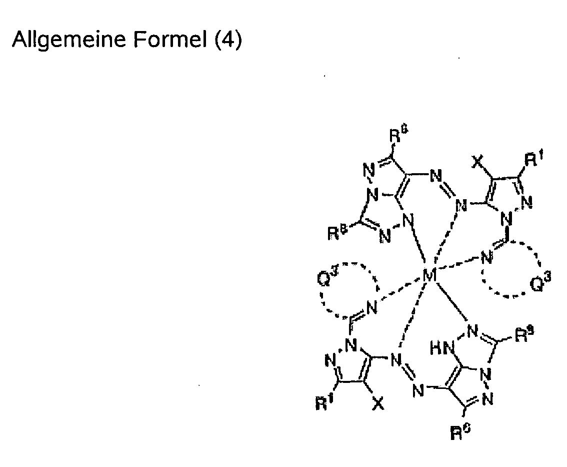 worin M ein Metallion (oder ein Metalloxidion) repräsentiert, Q³ eine Atomgruppe, die einen Stickstoff-enthaltenden Heterocyclus bildet, repräsentiert, X einen Substituenten repräsentiert, und R¹, R⁶, R⁷ und R⁸ unabhängig voneinander ein Wasserstoffatom oder einen Substituenten repräsentieren.

9. Optisches Informationsaufzeichnungsmedium nach Anspruch 2, bei dem
der Azo-Metallkomplex-Farbstoff dargestellt wird durch die folgende allgemeine Formel (2): 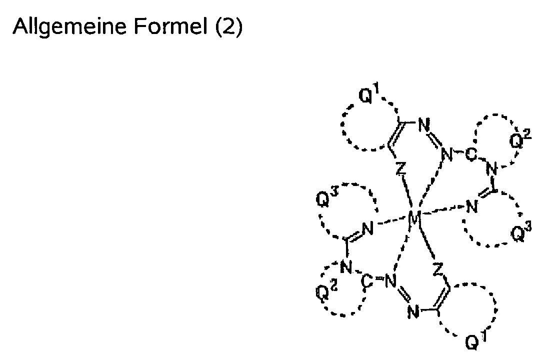 worin M ein Metallion (oder ein Metalloxidion) repräsentiert, Q¹ eine Atomgruppe, die einen Carbocyclus oder einen Heterocyclus bildet, repräsentiert, Q² und Q³ unabhängig voneinander eine Atomgruppe, die einen Stickstoff-enthaltenden Heterocyclus bildet, repräsentieren, und Z eine Gruppe repräsentiert, die durch Abspalten eines Wasserstoffatoms von dem Y (Y = ZH) geschaffen wird.

10. Optisches Informationsaufzeichnungsmedium nach Anspruch 1, bei dem
der Stickstoff-enthaltende Heterocyclus, der durch Q² gebildet wird, dargestellt wird durch eine der folgenden Strukturformeln (q-1) bis (q-4): 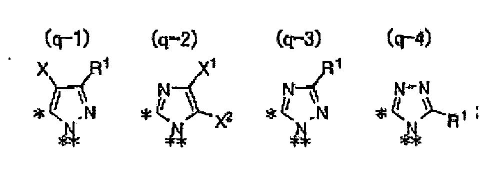 worin jedes Sternchen * eine Position repräsentiert, an der der Heterocyclus an die -N=N--Gruppe gebunden ist, jedes Doppelsternchen ** eine Position repräsentiert, an der der Heterocyclus an den Stickstoff-enthaltenden Heterocyclus, der durch Q³ oder die -COR²-Gruppe gebildet wird, gebunden ist, X, X¹ und X² unabhängig voneinander einen Substituenten repräsentieren, und R¹ ein Wasserstoff-atom oder einen Substituenten repräsentiert.

11. Optisches Informationsaufzeichnungsmedium nach Anspruch 1, bei dem
das Metallion in dem Azo-Metallkomplex-Farbstoff ein Kupferion, ein Eisenion oder ein Manganion ist.

12. Optisches Informationsaufzeichnungsmedium nach Anspruch 1, bei dem
eine Reflexionsschicht und eine Farbstoff-enthaltende Aufzeichnungsschicht in dieser Reihenfolge auf einer vorgerillten Oberfläche des Substrats mit Vorrillen mit einem Spurabstand von 50 bis 500 nm aufeinander geschichtet sind.

13. Azo-Metallkomplex-Farbstoff, der abgeleitet ist von einem Metallion (oder einem Metalloxidion) und einem Azofarbstoff, der dargestellt wird durch die folgende allgemeine Formel (1): 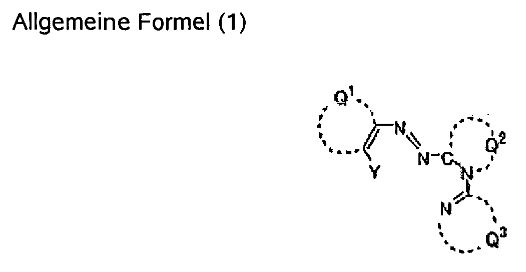 worin Q¹ eine Atomgruppe, die einen Carbocyclus oder einen Heterocyclus bildet, repräsentiert, Q² und Q³ unabhängig voneinander eine Atomgruppe, die einen stickstoff-enthaltenden Heterocyclus bildet, repräsentieren, und Y eine Gruppe repräsentiert, die in der Lage ist, an ein Metallion zu koordinieren.

## Revendications

1. Support d'enregistrement d'information optique comprenant un substrat transparent en forme de disque présentant des pré-rainures avec un pas transversal de 50 à 500 nm et une couche d'enregistrement sur laquelle une information est enregistrée par irradiation avec une lumière laser présentant une longueur d'onde de 440 nm ou inférieure, dans lequel
ladite couche d'enregistrement comprend au moins un colorant de complexe azo-métallique dérivé d'un ion métallique (ou d'un ion d'oxyde métallique) et d'un colorant azo représenté par la formule de structure (1-1) ou (1-2) suivante : 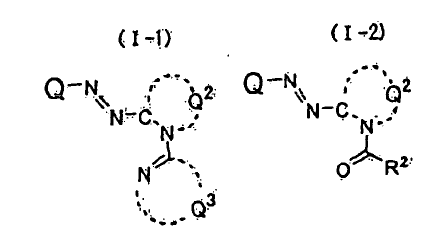 où Q représente un groupe carbocyclique ou un groupe hétérocyclique, Q² et Q³ représentent indépendamment un groupe atomique formant un hétérocycle contenant de l'azote et R² représente un substituant.

2. Support d'enregistrement d'information optique selon la revendication 1, dans lequel
ladite couche d'enregistrement comprend au moins un colorant de complexe azo-métallique dérivé d'un ion métallique (ou d'un ion d'oxyde métallique) et d'un colorant azo représenté par la formule générale (1) suivante : 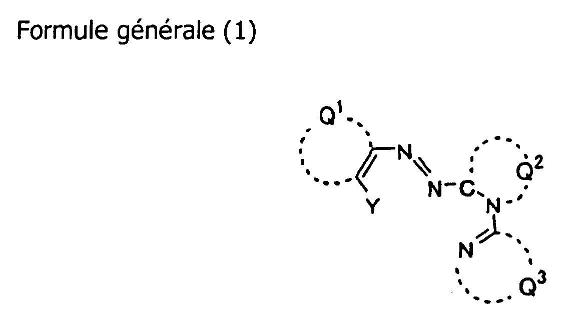 dans laquelle Q¹ représente un groupe atomique formant un carbocycle ou un hétérocycle, Q² et Q³ représentent indépendamment un groupe atomique formant un hétérocycle contenant de l'azote et Y représente un groupe pouvant se coordonner avec un ion métallique.

3. Support d'enregistrement d'information optique selon la revendication 2, dans lequel
ledit hétérocycle contenant de l'azote formé par Q² est représenté par une des formules de structure (q-1) à (q-4) suivantes : 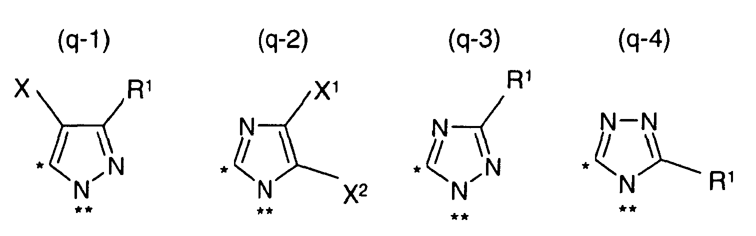 où chaque astérisque * représente une position à laquelle l'hétérocycle est lié au groupe -N=N-, chaque double astérisque ** représente une position à laquelle l'hétérocycle est lié audit hétérocycle contenant de l'azote formé par Q³ ou au groupe -COR², X, X¹ et X² représentent indépendamment un substituant, et R¹ représente un atome d'hydrogène ou un substituant.

4. Support d'enregistrement d'information optique selon la revendication 3, dans laquelle
ledit carbocycle ou hétérocycle formé par Q¹ est un noyau benzène, un noyau pyrrazole ou un noyau représenté par une des formules de structure (C-1) à (C-4) suivantes : 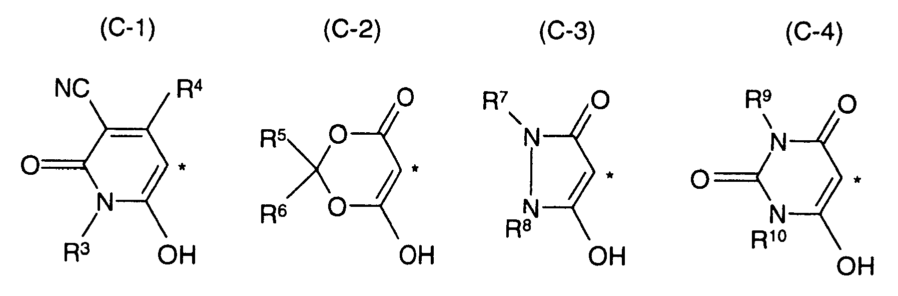 où chaque astérisque * représente une position à laquelle le noyau est lié au groupe azo (le groupe -N=N-), R³ à R¹⁰ représentent indépendamment un atome d'hydrogène ou un substituant, et des substituants adjacents peuvent être liés pour former un noyau, et
lorsque ledit hétérocycle formé par Q¹ est ledit noyau représenté par une des formules de structure (C-1) à (C-4), ledit Y est le groupe hydroxyle dans les formules de structure (C-1) à (C-4).

5. Support d'enregistrement d'information optique selon la revendication 3, dans lequel
ledit colorant de complexe azo-métallique est représenté par la formule générale (2) suivante : 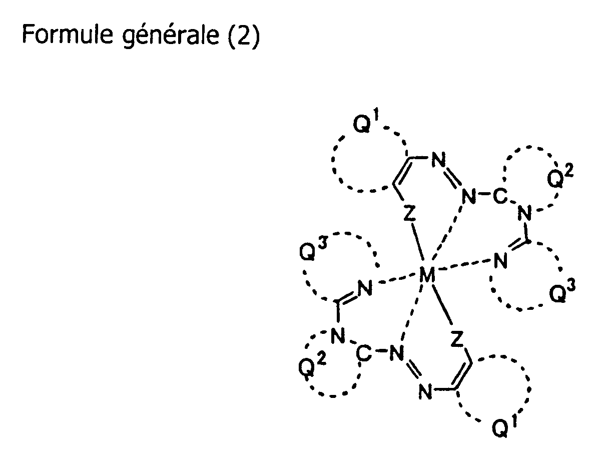 dans laquelle M représente un ion métallique (ou un ion d'oxyde métallique), Q¹ représente un groupe atomique formant un carbocycle ou un hétérocycle, Q² et Q³ représentent indépendamment un groupe atomique formant un hétérocycle contenant de l'azote et Z représente un groupe fourni par élimination d'un atome d'hydrogène dudit Y (Y = ZH).

6. Support d'enregistrement d'information optique selon la revendication 2, dans lequel
ledit carbocycle ou hétérocycle formé par Q¹ est un noyau benzène, un noyau pyrazole ou un noyau représenté par une des formules de structure (C-1) à (C-4) suivantes : 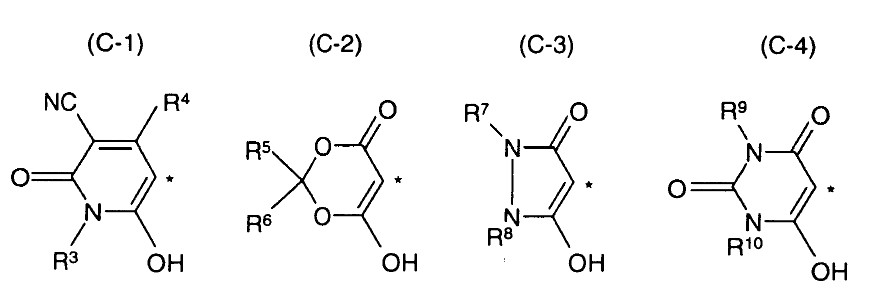 où chaque astérisque * représente une position à laquelle le noyau est lié au groupe azo (le groupe -N=N-), R³ à R¹⁰ représentent indépendamment un atome d'hydrogène ou un substituant, et des substituants adjacents peuvent être liés pour former un noyau, et
lorsque ledit hétérocycle formé par Q¹ est ledit noyau représenté par une des formules de structure (C-1) à (C-4), ledit Y est le groupe hydroxyle dans les formules de structure (C-1) à (C-4).

7. Support d'enregistrement d'information optique selon la revendication 6, dans lequel
ledit colorant de complexe azo-métallique est représenté par la formule générale (2) suivante : 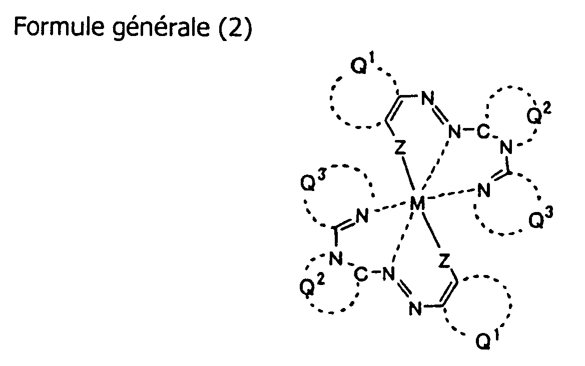 dans laquelle M représente un ion métallique (ou un ion d'oxyde métallique), Q¹ représente un groupe atomique formant un carbocycle ou un hétérocycle, Q² et Q³ représentent indépendamment un groupe atomique formant un hétérocycle contenant de l'azote, et Z représente un groupe fourni par élimination d'un atome d'hydrogène dudit Y (Y = ZH).

8. Support d'enregistrement d'information optique selon la revendication 7, dans lequel
ledit colorant de complexe azo-métallique est représenté par la formule générale (3) ou (4) suivante : 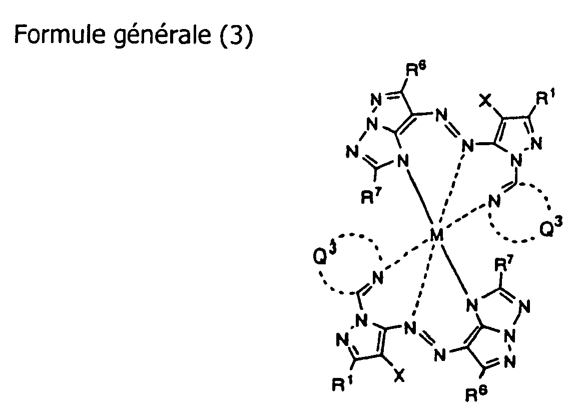 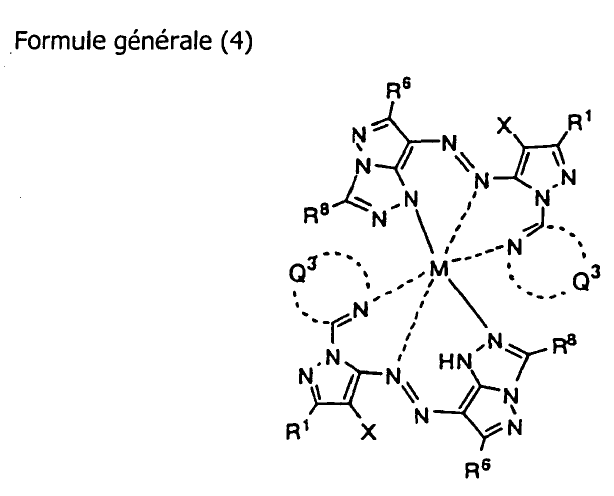 dans lesquelles M représente un ion métallique (ou un ion d'oxyde métallique), Q³ représente un groupe atomique formant un hétérocycle contenant de l'azote, X représente un substituant et R¹, R⁶, R⁷ et R⁸ représentent indépendamment un atome d'hydrogène ou un substituant.

9. Support d'enregistrement d'information optique selon la revendication 2, dans lequel
ledit colorant de complexe azo-métallique est représenté par la formule générale (2) suivante : 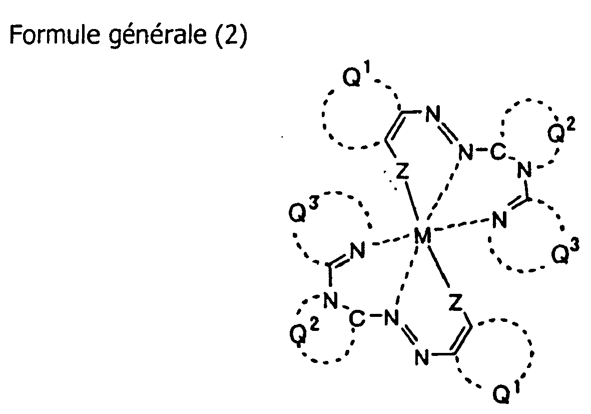 dans laquelle M représente un ion métallique (ou un ion d'oxyde métallique), Q¹ représente un groupe atomique formant un carbocycle ou un hétérocycle, Q² et Q³ représentent indépendamment un groupe atomique formant un hétérocycle contenant de l'azote, et Z représente un groupe fourni par élimination d'un atome d'hydrogène dudit Y (Y = ZH).

10. Support d'enregistrement d'information optique selon la revendication 1, dans lequel
ledit hétérocycle contenant de l'azote formé par Q² est représenté par une des formules de structure (q-1) à (q-4) suivantes : 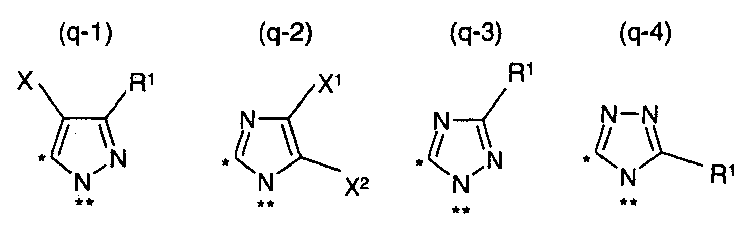 où chaque astérisque * représente une position à laquelle l'hétérocycle est lié au groupe -N=N-, chaque double astérisque ** représente une position à laquelle l'hétérocycle est lié audit hétérocycle contenant de l'azote formé par Q³ ou au groupe -COR², X, X¹ et X² représentent indépendamment un substituant et R¹ représente un atome d'hydrogène ou un substituant.

11. Support d'enregistrement d'information optique selon la revendication 1, dans lequel
ledit ion métallique dans ledit colorant de complexe azo-métallique est union cuivre, un ion fer ou un ion manganèse.

12. Support d'enregistrement d'information optique selon la revendication 1, dans lequel
une couche de réflexion et une couche d'enregistrement contenant un colorant sont empilées dans cet ordre sur une surface formée de pré-rainures dudit substrat présentant des pré-rainures avec un pas transversal de 50 à 500 nm.

13. Colorant de complexe azo-métallique dérivé d'un ion métallique (ou d'un ion d'oxyde métallique) et d'un colorant azo représenté par la formule générale (1) suivante : 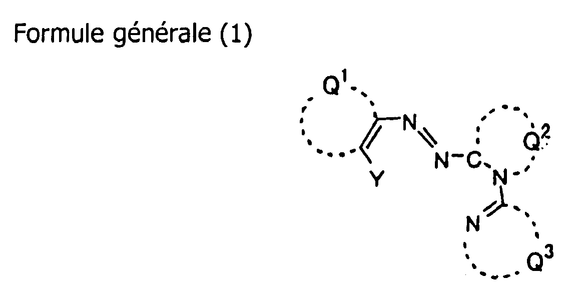 dans laquelle Q¹ représente un groupe atomique formant un carbocyle ou un hétérocycle, Q² et Q³ représentent indépendamment un groupe atomique formant un hétérocycle contenant de l'azote, et Y représente un groupe pouvant se coordonner avec un ion métallique.
